# EUROPÄISCHE PATENTANMELDUNG

(11) **EP 4 502 005 A1**
(43) Veröffentlichungstag der Anmeldung: **05.02.2025**
(21) Anmeldenummer: 23188883.5
(22) Anmeldetag: 01.08.2023
(51) Int. Cl.: C08G 65/26, C04B 24/24, C08G 65/333, C08G 65/335

(54) **DISPERGIERMITTEL AUF BASIS VON POLYETHERAMIDAMINPHOSPHONSÄUREN**

(71) Anmelder: Evonik Operations GmbH, 45128 Essen (DE)
(72) Erfinder: SCHUBERT, Frank, 47506 Neukirchen-Vluyn (DE); REINSCHMIDT, Anke, 45326 Essen (DE); WOJTASIK, Dirk, 44579 Castrop-Rauxel (DE); VETTER, Andreas, 45355 Essen (DE)
(74) Vertreter: Evonik Patent Association

(57) **Zusammenfassung**

Die Erfindung betrifft
1) ein Verfahren zur Herstellung von Polyetheramidaminphosphonsäuren oder Polyetheramidaminphosphonatsalzen oder deren wässerige Lösungen, wobei das Verfahren folgende Schritte umfasst:
a) Umsetzung mindestens eines Salicylsäureesters als Startverbindung einer Alkoxylierungsreaktion in Gegenwart von mindestens einem Doppelmetallcyanid (DMC)-Katalysators mit mindestens einem Epoxid zu mindestens einem Polyether;
b) Umsetzung des mindestens einen Polyethers aus Schritt a) mit mindestens einem Polyamin, das mindestens zwei Aminogruppen ausgewählt aus der Gruppe bestehend aus primären und sekundären Aminogruppen trägt, zu mindestens einem Polyetheramidamin;
c) Umsetzung des mindestens einen Polyetheramidamins aus Schritt b) mit mindestens einem Aldehyd und Phosphonsäure zu mindestens einer Polyetheramidaminphosphonsäure;
und gegebenenfalls
d) Lösen der mindestens einen Polyetheramidaminphosphonsäure aus Schritt c) in Wasser;
und gegebenenfalls
e) vollständige oder teilweise Neutralisation der mindestens einen Polyetheramidaminphosphonsäure aus Schritt c) oder deren wässerige Lösung aus Schritt d) mit mindestens einer Base zu mindestens einem Polyetheramidaminphosphonatsalz oder dessen wässerige Lösung;
dadurch gekennzeichnet, dass
(i) der mindestens eine Salicylsäureester ausgewählt ist aus Verbindungen der Formel (1) 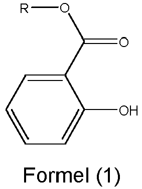 wobei R ein Kohlenwasserstoffrest mit mindestens drei Kohlenstoffatomen ist; und
(ii) als Epoxid zumindest Propylenoxid verwendet wird, und der mindestens eine Salicylsäureester vor einer optionalen Umsetzung mit weiteren Epoxiden zunächst mit Propylenoxid umgesetzt wird;

2) Produkte, die gemäß diesem Verfahren herstellbar sind;
3) die Verwendung dieser Produkte als Dispergiermittel;
4) sowie hydraulisch abbindende Zusammensetzung, die diese Produkte enthalten.

## Beschreibung

Die Erfindung liegt auf dem Gebiet der Polyetheramidaminphosphonsäuren, Polyetheramidaminphosphonatsalze und deren wässerige Lösungen, ihrer Herstellung, ihrer Verwendung als Dispergiermittel insbesondere in hydraulisch abbindenden Zusammensetzungen.

Dispergiermittel sind seit langem bekannt. Ihre Grundeigenschaft ist, dass sie über ionische oder nichtionische Struktureinheiten verfügen, mit denen sie im Stande sind, mit Oberflächen anderer Stoffe in Wechselwirkung zu treten. Der Fachmann kennt zum Beispiel Polymere wie Polyether, die vorwiegend in einer Alkoxylierungsreaktion von Propylenoxid und Ethylenoxid hergestellt werden und durch Einbringen von Comonomeren oder das nachfolgende chemische Modifizieren mit polaren oder ionischen Haftgruppen wirksame Dispergiermittel darstellen. Je nach Anwendungsbereich und Art der zu dispergierenden Partikel können diese Stoffe ganz unterschiedlich aufgebaut sein.

Die Art der zu dispergierenden Partikel kann organischer oder anorganischer Natur sein und reicht dabei von völlig unpolaren Stoffen wie Ruß oder Graphit über oxidische Farbpigmente wie Titandioxid sowie stark basische Stoffe wie Eisenhydroxid und Zementpartikel bis hin zu komplexen organischen Molekülen, die beispielsweise als Farbstoffe, pharmazeutische oder Agro-Wirkstoffe Anwendung finden.

Häufig fungieren Dispergiermittel als Additive in den unterschiedlichsten Mischungszusammensetzungen. Dabei haben sie die Aufgabe, zum Beispiel in Wasser unlösliche Feststoffpartikel in einer wasserbasierenden Formulierung so fein und dauerhaft stabil zu dispergieren, dass es auch über einen längeren Zeitraum nicht zu einer Sedimentation oder Agglomeration der Feststoffe kommt. Speziell in wässerigen Systemen müssen Dispergiermittel chemisch so aufgebaut sein, dass sie nicht nur über die zur Wechselwirkung mit den Partikeloberflächen fähigen funktionellen Gruppen verfügen, sondern außerdem wasserlöslich und hydrolysestabil sind.

Der Stand der Technik kennt zahlreiche Polyetheralkohole, die in einer Alkoxylierungsreaktion hergestellt und in einer Folgereaktion an der terminalen Hydroxylgruppe mit einer ionischen Gruppe funktionalisiert werden, welche zum einen als Haftgruppe gegenüber den zu dispergierenden festen Partikeln wirkt und zum anderen die Wasserlöslichkeit verbessert. Weit verbreitet sind zum Beispiel Polyetherphosphate, die zum Beispiel durch eine Umsetzung von Polyetheralkoholen mit Polyphosphorsäure erhalten werden. Ebenso seit langem bekannt sind Polyether mit terminalen Carboxylgruppen, wie sie etwa aus Polyetheralkoholen und cyclischen Anhydriden wie Bernsteinsäureanhydrid oder Maleinsäureanhydrid unter Ringöffnung erhalten werden. Eine spezielle Klasse stellen Sulfosuccinate von Polyethern dar, die neben einer Carboxylgruppe auch eine Sulfonsäuregruppe aufweisen.

Um als Dispergiermittel eine ausreichende Wirkung zu zeigen, muss die Struktur der Polyether und die Art der ionischen oder nichtionischen Haftgruppe ideal auf die chemische Zusammensetzung der Endrezeptur in der Anwendung zugeschnitten sein.

Nur relativ wenig ist im Stand der Technik über Dispergiermittel bekannt, die auf polymeren Aminen basieren und mit Phosphonsäuregruppen ausgestattet sind. Dies trifft besonders auf Polyamine zu, die einerseits mit einem Polyetherrest verknüpft sind und andererseits über ein oder mehrere Stickstoffatome mit mindestens einem Phosphonsäurerest funktionalisiert sind. Derartige Verbindungen zeichnen sich dadurch aus, dass sie auf mehrfachem Wege in der Lage sind, über polare und ionische Wechselwirkungen mit Oberflächen von z.B. Partikeln zu interagieren. Die Stoffe liegen in der Regel als innere Salze vor. Die aciden Phosphonsäuregruppen sind zumindest teilweise deprotoniert und liegen als anionische Phosphonatgruppen vor während die Stickstoffatome zum Teil protoniert und als kationische Einheiten im selben Molekül enthalten sind.

US 3,288,846 offenbart ein Verfahren zur Herstellung von Aminophosphonsäuren durch Umsetzung eines primären oder sekundären Amins wie Ethylamin oder Di-n-propylamin mit Formaldehyd und Phosphonsäure. Die Reaktionsprodukte enthalten keine Polyetherreste. Die Anwendungen liegen im Bereich der Textilweichspüler und Wasserenthärtung.

US 5,338,477 beschreibt lineare Polyetherpolyaminomethylenphosphonate, die durch Phosphonierung von Polyetherdiaminen hergestellt werden. Die an beiden Kettenenden des Polyethers über den Aminstickstoff vierfach mit Phosphonsäureeinheiten ausgestatteten Produkte werden auf Grund ihrer guten Wechselwirkung mit z.B. Calciumverbindungen zur Wasserenthärtung eingesetzt.

Didier Villemin et. al. beschreiben in "Phosphonated Polyethyleneimines (PEIP) as Multi-Use Polymers", Phosphorus, Sulfur, and Silicon the Related Elements, 190:879-890, 2015 phosphonierte hyperverzweigte Polyethylenimine, die durch Reaktion der Polyethylenimine mit Formaldehyd und Phosphonsäure unter Mikrowellenbestrahlung gewonnen wurden. Die vollständig phosphonierten Polyethylenimine sind Harze, die sich als Korrosionsschutzmittel eignen. Teilweise phosphonierte Polyethylenimine stabilisieren Eisenoxid- und Silber-Nanopartikel.

US 4,080,375 offenbart ein Verfahren zur Herstellung von Methylenphosphonaten von Amin-terminierten Alkoxylierungsprodukten wie Polyethern, die zwei oder mehr als zwei Aminogruppen aufweisen, bei dem die Amin-terminierten Alkoxylierungsprodukten durch eine Reaktion mit Phosphonsäure und Formaldehyd phosphoniert werden. Sie dienen als Chelatisierungsmittel für Metallkationen, als Detergentien, Seifen und als Hilfsmittel in der Textil- und Papierverarbeitung sowie in der Erdölförderung.

US 5,879,445 beschränkt sich im Unterschied zu US 4,080,375 auf Polyethermonoamine ein, die auf ähnlichem Wege durch Umsetzung mit Formaldehyd und Phosphonsäure mit einer oder maximal zwei Phosphonsäuregruppen funktionalisiert sind. Die entstehenden Produkte sind Verdünner für wässerige Suspensionen von mineralischen Partikeln, insbesondere von Zementpartikeln, und senken die Viskosität hydraulischer Bindemittel.

US 2012/0129981 A1 offenbart, dass die in US 5,879,445 genannten phosphonierten Polyetheramine als Zusatzstoffe in hydraulischen Bindemitteln eingesetzt werden, die darüber hinaus eine weitere Additivkomponente wie Polycarboxylatether enthalten.

Bedingt durch die Monofunktionalität der eingesetzten Polyetheramine beschränkt sich die Phosphonsäurefunktionalität der in US 5,879,445 und US 2012/0129981 A1 beanspruchten Produkte auf maximal zwei Einheiten pro Molekül.

CN 113121815 A beschreibt Polyetherphosphonate, die in einem dreistufigen Prozess hergestellt werden. Im ersten Schritt wird ein Hydroxycarbonsäuremethylester oder ein Hydroxycarbonsäureethylester in Gegenwart eines Doppelmetallcyanid (DMC)-Katalysators und Benzoesäure als Cokatalysator an der Hydroxylgruppe alkoxyliert, In der zweiten Stufe findet eine Amidierungsreaktion mit einem Polyamin wie Ethylendiamin oder Diethylentriamin an der Estergruppe statt, wobei das zuvor als Ester gebundene Methanol bzw. Ethanol abgespalten und destillativ entfernt wird. Im dritten Schritt wird das entstandene Amidamin durch eine Reaktion mit Phosphonsäure und einem Aldehyd wie Formaldehyd in Gegenwart einer starken Säure phosphoniert. Das Verfahren hat im Vergleich zu den in US 5,879,445 und US 2012/0129981 A1 beschriebenen Verfahren den Vorteil einer größeren strukturellen Vielfalt, ermöglicht es doch den Zugang zu Polyetheramidaminphosphonaten als Fließverbesserer in mineralischen Bindemitteln, deren Funktionalität an Phosphonsäuregruppen je nach verwendetem Polyamin in weiten Grenzen eingestellt werden kann.

Dennoch hat das in CN 113121815 A dargelegte Verfahren mehrere Nachteile. Als Ausgangsverbindungen eignen sich nur Methyl- und Ethylester der Hydroxycarbonsäuren, da die analogen Ester längerer Alkohole bei der anschließenden Amidierungsreaktion auf Grund ihrer sterischen Hinderung schlecht abgespalten werden können. Die quantitative Aminolyse ist aber Voraussetzung für die weitere Umsetzung zu den Phosphonaten und die gewünschte hohe Phosphonsäurefunktionalität im Endprodukt. Die Erfinder haben nun aber festgestellt, dass die Methyl- und Ethylester der Hydroxycarbonsäuren wenig geeignete Startverbindungen für die Alkoxylierungsreaktion darstellen. Bei Verwendung des DMC-Katalysators ist daher der Zusatz von Benzoesäure als Cokatalysator zwingend nötig, damit die Reaktion startet. Ferner bewirken die in CN 113121815 A beschriebenen Polyetheramidaminphosphonate ein verzögertes Abbindeverhalten der hydraulischen Bindemittel, was in vielen Fällen unerwünscht ist.

Der Stand der Technik macht deutlich, dass es für die Produktklasse der Aminphosphonate neben den Anwendungen in der Wasserenthärtung und in der Bauchemie nur wenige weitere Applikationen gibt. Ferner weisen die bislang bekannten und als Additive in mineralischen Bindemitteln verwendeten Polyetherphosphonate den Nachteil auf, das Abbindeverhalten zu verzögern. So erklären Luigi Coppola et. al. in "Performance and Compatibility of Phosphonate-Based Superplasticizers for Concrete", Buildings 2017, 7, 62 die verdünnende Dispergierwirkung in hydraulischen Bindemitteln wie etwa von Beton mit der Bildung von Komplexen mit den anorganischen Spezies. Diese Komplexierung beeinflusst unweigerlich die Hydratationsreaktionen des Bindemittels und führt zu einem verzögerten Abbinden des Betons. Das langsame Abbinden kann in einigen Fällen wie bei hohen Außentemperaturen oder langen Transportwegen vorteilhaft sein. In vielen Fällen ist dies jedoch ein Nachteil, da das langsame Erhärten des hydraulischen Bindemittels den Baufortschritt aufhält.

Die Aufgabe der vorliegenden Erfindung war es daher, zumindest einen Nachteil des Standes der Technik zu überwinden. Es bestand insbesondere die Aufgabe ein verbessertes, großtechnisch anwendbares Verfahren zur Herstellung von Dispergiermitteln auf Basis von Polyetheramidaminphosphonsäure zur Verfügung zu stellen. Das Verfahren sollte dabei insbesondere ohne die zwingende Verwendung von Cokatalysatoren auskommen. Die entsprechend hergestellten Dispergiermittel sollten zudem in hydraulischen abbindenden Zusammensetzungen möglichst nicht zu einem verzögerten Abbindeverhalten führen.

Überraschenderweise wurde nun gefunden, dass ein spezielles Verfahren, wie in den Ansprüchen beschrieben, die vorgenannte Aufgabe löst.

Dieses spezielle Verfahren unterscheidet sich zumindest dadurch von dem in CN 113121815 A dargelegten Verfahren, dass in einem ersten Schritt eine Umsetzung mindestens eines Salicylsäureesters als Startverbindung einer Alkoxylierungsreaktion in Gegenwart von mindestens einem Doppelmetallcyanid (DMC)-Katalysator mit mindestens einem Epoxid zu mindestens einem Polyether erfolgt, wobei
(i) der mindestens eine Salicylsäureester ausgewählt ist aus Verbindungen der Formel (1) 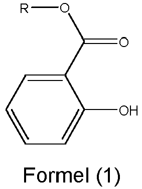 wobei R ein Kohlenwasserstoffrest mit mindestens drei Kohlenstoffatomen ist; und
(ii) als Epoxid zumindest Propylenoxid verwendet wird, und der mindestens eine Salicylsäureester vor einer optionalen Umsetzung mit weiteren Epoxiden zunächst mit Propylenoxid umgesetzt wird.

Dieses Verfahren hat gegenüber dem in CN 113121815 A dargelegten Verfahren den Vorteil, dass bei der Umsetzung auf Cokatalysatoren, wie Benzoesäure, verzichtet werden kann, da keine Methyl- und Ethylestern von Hydroxycarbonsäuren eingesetzt werden müssen.

Auch die gemäß dem erfindungsgemäßen Verfahren erhaltenen Produkte unterscheiden sich von denen in CN 113121815 A beschriebenen, und zwar zumindest darin, dass an das Sauerstoffatom, das ursprünglich aus der Hydroxygruppe des eingesetzten Salicylsäureesters stammt, zumindest eine Oxypropylen-Einheit gebunden ist. Das kommt daher, dass im Zuge der oben beschriebenen Alkoxylierung die erste an die Startverbindung gebundene Monomereinheit ein Oxypropylenrest bzw. Propylenoxyrest ist, der aus der Ringöffnung von Propylenoxid hervorgegangen ist. Die so erhaltenen Dispergiermittel haben gegenüber den in CN 113121815 A offenbarten Dispergiermitteln den Vorteil, dass sie in hydraulisch abbindenden Zusammensetzungen nicht zu einem verzögerten Abbindeverhalten führen.

Gelöst wird die Aufgabe der vorliegenden Erfindung daher durch die Gegenstände der unabhängigen Ansprüche.

Vorteilhafte Ausgestaltungen der erfindungsgemäßen Gegenstände sind den Ansprüchen, den Beispielen und der Beschreibung zu entnehmen. Darüber hinaus wird ausdrücklich darauf hingewiesen, dass die Offenbarung zu den erfindungsgemäßen Gegenständen alle Kombinationen von einzelnen Merkmalen der Beschreibung der Erfindung und der Patentansprüche einschließt. Insbesondere gelten Ausführungsformen eines erfindungsgemäßen Gegenstands *mutatis mutandis* auch für die Ausführungsformen der anderen erfindungsgemäßen Gegenstände.

Die erfindungsgemäßen Gegenstände werden nachfolgend beispielhaft beschrieben, ohne dass die Erfindung auf diese beispielhaften Ausführungsformern beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

Werden nachfolgend Mittelwerte angegeben, so handelt es sich, wenn nicht anders angegeben, um Zahlenmittel. Werden nachfolgend Messwerte, Parameter oder Stoffeigenschaften angegeben, die durch Messung bestimmt werden, so handelt es sich, wenn nicht anders angegeben, um Messwerte, Parameter oder Stoffeigenschaften gemessen bei 25 °C sowie vorzugsweise bei einem Druck von 101325 Pa (Normaldruck).

Die zahlenmittlere Molmasse Mₙ, die gewichtsmittlere Molmasse M_{w} und die Polydispersität (M_{w}/Mₙ) werden im Rahmen der vorliegenden Erfindung vorzugsweise mittels Gel-Permeations-Chromatographie (GPC) bestimmt, wie in den Beispielen beschrieben, sofern nicht explizit anders angegeben.

Werden nachfolgend Zahlenbereiche in der Form "X bis Y" angegeben, wobei X und Y die Grenzen des Zahlenbereichs darstellen, so ist dies gleichbedeutend mit der Angabe "von mindestens X bis einschließlich Y", sofern nicht anders angegeben. Bereichsangaben schließen die Bereichsgrenzen X und Y also mit ein, sofern nicht anders angegeben.

Wo immer Moleküle bzw. Molekülfragmente ein oder mehrere Stereozentren aufweisen oder aufgrund von Symmetrien in Isomere unterschieden werden können oder aufgrund anderer Effekte, wie zum Beispiel eingeschränkter Rotation, in Isomere unterschieden werden können, sind vorzugsweise alle möglichen Isomere von der vorliegenden Erfindung miteingeschlossen.

Die weiter unten folgenden Formeln (2) und (3) beschreiben Verbindungen oder Reste, die aus Wiederholungseinheiten aufgebaut sind, wie beispielsweise sich wiederholende Fragmente, Blöcke oder Monomereinheiten, und eine Molgewichtsverteilung aufweisen können. Die Häufigkeit der Wiederholungseinheiten wird durch Indizes angegeben. Die in den Formeln verwendeten Indizes sind als statistische Mittelwerte (Zahlenmittel) zu betrachten, sofern nicht explizit anders angegeben. Die verwendeten Indexzahlen sowie die Wertebereiche der angegebenen Indizes werden als Mittelwerte der möglichen statistischen Verteilung der tatsächlichen vorhandenen Strukturen und/oder deren Mischungen verstanden. Die verschiedenen Fragmente bzw. Wiederholungseinheiten der in den nachfolgenden Formel (2) und (3) beschriebenen Verbindungen können statistisch verteilt sein. Statistische Verteilungen sind blockweise aufgebaut mit einer beliebigen Anzahl an Blöcken und einer beliebigen Sequenz oder unterliegen einer randomisierten Verteilung, sie können auch alternierend aufgebaut sein, oder auch über die Kette, sofern eine solche vorliegt, einen Gradienten bilden, insbesondere können sie auch alle Mischformen bilden, bei denen gegebenenfalls Gruppen unterschiedlicher Verteilungen aufeinander folgen können. In den nachfolgenden Formeln sind alle Permutationen von Wiederholungseinheiten mitumfasst.

Werden also im Rahmen der vorliegenden Erfindung Verbindungen beschrieben, die verschiedene Einheiten mehrfach aufweisen können, so können diese sowohl ungeordnet, z.B. statistisch verteilt, oder geordnet in diesen Verbindungen vorkommen. Die Angaben zur Anzahl bzw. relativen Häufigkeit von Einheiten in solchen Verbindungen sind als Mittelwert (Zahlenmittel), gemittelt über alle entsprechenden Verbindungen, zu verstehen. Spezielle Ausführungen können dazu führen, dass die statistischen Verteilungen durch die Ausführungsform Beschränkungen erfahren. Für alle Bereiche, die nicht von der Beschränkung betroffen sind, ändert sich die statistische Verteilung nicht.

Ein erster Gegenstand der Erfindung ist ein Verfahren zur Herstellung von Polyetheramidaminphosphonsäuren oder Polyetheramidaminphosphonatsalzen oder deren wässerige Lösungen, welches die folgenden Schritte umfasst:
a) Umsetzung mindestens eines Salicylsäureesters als Startverbindung einer Alkoxylierungsreaktion in Gegenwart von mindestens einem Doppelmetallcyanid (DMC)-Katalysator mit mindestens einem Epoxid zu mindestens einem Polyether;
b) Umsetzung des mindestens einen Polyethers aus Schritt a) mit mindestens einem Polyamin, das mindestens zwei Aminogruppen ausgewählt aus der Gruppe bestehend aus primären und sekundären Aminogruppen trägt, zu mindestens einem Polyetheramidamin;
c) Umsetzung des mindestens einen Polyetheramidamins aus Schritt b) mit mindestens einem Aldehyd und Phosphonsäure zu mindestens einer Polyetheramidaminphosphonsäure;
   und gegebenenfalls
d) Lösen der mindestens einen Polyetheramidaminphosphonsäure aus Schritt c) in Wasser;
   und gegebenenfalls
e) vollständige oder teilweise Neutralisation der mindestens einen Polyetheramidaminphosphonsäure aus Schritt c) oder deren wässerige Lösung aus Schritt d) mit mindestens einer Base zu mindestens einem Polyetheramidaminphosphonatsalz oder dessen wässerige Lösung;
dadurch gekennzeichnet, dass
(i) der mindestens eine Salicylsäureester ausgewählt ist aus Verbindungen der Formel (1) 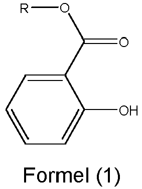 wobei R ein Kohlenwasserstoffrest mit mindestens drei Kohlenstoffatomen ist; und
(ii) als Epoxid zumindest Propylenoxid verwendet wird, und der mindestens eine Salicylsäureester vor einer optionalen Umsetzung mit weiteren Epoxiden zunächst mit Propylenoxid umgesetzt wird.

Die Schritte a), b), c), erfolgen dabei in der angegebenen Reihenfolge, also zunächst a), dann b) und dann c). Das Verfahren kann gegebenenfalls die Schritte d) und/oder e) umfassen. Die Schritte d) und e) sind also optional. Sofern Schritt d) durchgeführt wird folgt er auf Schritt c). Sofern Schritt e) durchgeführt wird, folgt er auf Schritt c) oder d). Die genannten Verfahrensschritte a), b), c), d) und e) können unmittelbar oder mittelbar aufeinander folgen. Das Verfahren kann weitere vorgelagerte Schritte, Zwischenschritte, oder nachgelagerte Schritte, wie zum Beispiel eine Aufreinigung der Edukte, der Zwischenprodukte und/oder der Endprodukte, aufweisen. Die genannten Verfahrensschritte werden im Folgenden detailliert beschrieben. Ob das Verfahren die Schritte d) und/oder e) umfasst, hängt davon ab, ob als Verfahrensprodukt Polyetheramidaminphosphonsäuren, Polyetheramidaminphosphonatsalze oder deren wässerige Lösungen erhalten werden sollen.

### Schritt a)

Als Startverbindung (im Folgenden auch als Starter bezeichnet) für die Alkoxylierungsreaktion werden Salicylsäureester der Formel (1) 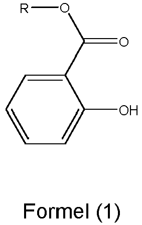 eingesetzt werden, wobei R ein Kohlenwasserstoffrest mit mindestens drei Kohlenstoffatomen ist.

Vorzugsweise ist R in Formel (1) ein gesättigter oder ungesättigter, linearer oder verzweigter Kohlenwasserstoffrest mit 3 bis 8, bevorzugt mit 4 bis 6, bevorzugter mit 4 Kohlenstoffatomen und besonders bevorzugt ein Isobutylrest ist. Besonders bevorzugt wird also Isobutylsalicylat als Startverbindung eingesetzt.

Die Verbindungen der Formel (1) können dabei allein oder in beliebigen Mischungen eingesetzt werden.

Die Umsetzung erfolgt dabei in Gegenwart von mindestens einem Doppelmetallcyanid-Katalysator (DMC-Katalysator). Vorzugsweise werden Zink/Cobalt-DMC-Katalysatoren eingesetzt, insbesondere solche, die Zinkhexacyanocobaltat(III) enthalten. Vorzugsweise werden die in US 5,158,922, US 20030119663, WO 01/80994 beschriebenen DMC-Katalysatoren eingesetzt. Die DMC-Katalysatoren können amorph oder kristallin sein.

Es ist bevorzugt, dass die Katalysatorkonzentration von >0 wppm bis 1000 wppm, bevorzugter von >0 wppm bis 700 wppm, am bevorzugtesten von >10 wppm bis 500 wppm bezogen auf die Gesamtmasse der entstehenden Produkte beträgt. Die Abkürzung "wppm" steht dabei für Gewichtsteile pro Million.

Vorzugsweise wird der Katalysator nur einmal in den Reaktor dosiert. Dieser sollte vorzugsweise sauber, trocken und frei von basischen Verunreinigungen sein, die den DMC-Katalysator inhibieren könnten. Die Katalysatormenge ist vorzugsweise so einzustellen, dass eine ausreichende katalytische Aktivität für das Verfahren gegeben ist. Der Katalysator kann als Feststoff oder in Form einer Katalysatorsuspension dosiert werden. Wird eine Suspension verwendet, so eignet sich insbesondere der Starter als Suspensionsmittel.

Um die DMC-katalysierte Umsetzung zu starten, ist es vorteilhaft sein, den Katalysator zunächst mit einer Portion Propylenoxid zu aktivieren.

Die erfindungsgemäß hergestellten Polyether sind somit dadurch charakterisiert, dass sie als erste Monomereinheit an der Startverbindung eine durch Ringöffnung von Propylenoxid hervorgegangene Oxypropyleneinheit bzw. Propylenoxyeinheit aufweisen. Erst nach dem Anspringen der Alkoxylierungsreaktion wird erfindungsgemäß mit der kontinuierlichen Monomerzugabe von beliebigen Epoxiden begonnen.

Die Reaktionstemperatur beträgt bevorzugt von 50 °C bis 180 °C, bevorzugter von 60 °C bis 150 °C und am bevorzugtesten von 80 °C bis 140 °C.

Die erfindungsgemäße Verwendung eines Salicylsäureesters und insbesondere von Salicylsäureisobutylester erlaubt es in Kombination mit dem Einsatz von Propylenoxid als erstes Monomer, die DMC-katalysierte Alkoxylierungsreaktion auf einfachem Wege zu starten, so dass auf die gemäß CN 113121815 A benötigte Zugabe eines Cokatalysators verzichtet werden kann.

Es ist daher bevorzugt, dass im Schritt a) keine Benzoesäure als Cokatalysator eingesetzt wird.

Der Innendruck des Reaktors beträgt bevorzugt von 0,02 bar bis 20 bar, bevorzugter von 0,05 bar bis 10 bar, am bevorzugtesten von 0,1 bar bis 5 bar (absolut). Am bevorzugtesten wird eine DMC-katalysierte Umsetzung bei einer Temperatur von 80 °C bis 140 °C und einem Druck von 0,1 bar bis 5 bar durchgeführt.

Bei der Umsetzung handelt es sich um eine Alkoxylierungsreaktion, also um eine Polyaddition von Epoxiden an mindestens einen Salicylsäureester als Startverbindung. Erfindungsgemäß wird als Epoxid zumindest Propylenoxid verwendet und der mindestens eine Salicylsäureester wird vor einer optionalen Umsetzung mit weiteren Epoxiden zunächst mit Propylenoxid umgesetzt.

Vorzugsweise werden zusätzlich zu Propylenoxid noch weitere Epoxide, ausgewählt aus der Gruppe bestehend aus Ethylenoxid und Alkylenoxiden mit 4 bis 8 Kohlenstoffatomen, bevorzugt ausgewählt aus der Gruppe bestehend aus Ethylenoxid, 1-Butylenoxid und Styroloxid, umgesetzt.

Die Epoxide können wahlweise einzeln in reiner Form, abwechselnd hintereinander in beliebiger Dosierreihenfolge, aber auch gleichzeitig gemischt zugefügt werden, jedoch unter der Voraussetzung, dass zunächst zumindest eine Teilmenge des eingesetzten Propylenoxids mit dem mindestens einen Salicylsäureester als Startverbindung umgesetzt wird, bevor andere Epoxide und gegebenfalls die Restmenge des eingesetzten Propylenoxids in der Alkoxylierungsreaktion umgesetzt werden. Die Sequenz der Monomereinheiten in der entstehenden Polyetherkette unterliegt damit einer blockweisen Verteilung oder einer statistischen Verteilung oder einer graduellen Verteilung im Endprodukt.

Die Abfolge der Epoxid-Monomer-Einheiten kann in weiten Grenzen durch die Reihenfolge der Zugabe variabel gestaltet werden. Die Molmassen der entstehenden Polyether können nach dem erfindungsgemäßen Verfahren in weiten Grenzen variiert und gezielt und reproduzierbar über das Molverhältnis der zugefügten Epoxid-Monomere in Bezug auf die OH-Gruppe des mindestens einen Salicylsäureesters gesteuert werden.

Vorzugsweise beträgt das molare Verhältnis der Gesamtheit der Epoxide zur Gesamtheit der Salicylsäureester von 5 bis 250, bevorzugt von 10 bis 200 besonders bevorzugt von 15 bis 100.

Die zahlenmittlere Molmasse Mₙ, gewichtsmittlere Molmasse M_{w} und Polydispersität (M_{w}/Mₙ) des in Schritt a) des Verfahrens hergestellten Polyethers sind beliebig.

Es ist bevorzugt, dass die zahlenmittlere Molmasse Mₙ des in Schritt a) des Verfahrens hergestellten Polyethers von 400 g/mol bis 20000 g/mol, bevorzugter von 500 g/mol bis 10000 g/mol, am bevorzugtesten von 600 g/mol bis 4000 g/mol beträgt.

Die Polydispersität (M_{w}/Mₙ) der Polyether (F) ist in weiten Bereichen variabel und beträgt bevorzugt von 1,01 bis 3, bevorzugter von 1,02 bis 2 besonders bevorzugt von 1,03 bis 1,5.

Die in Schritt a) des Verfahrens hergestellten Polyether sind vorzugsweise Verbindungen der Formel (2), 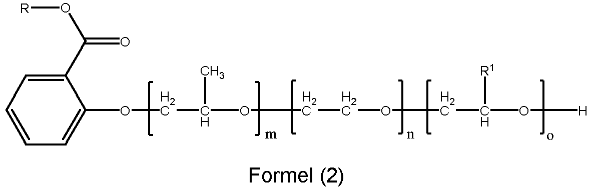 wobei
- R: ein gesättigter oder ungesättigter, linearer oder verzweigter Kohlenwasserstoffrest mit 3 bis 8 Kohlenstoffatomen, bevorzugt mit 4 bis 6, Kohlenstoffatomen, besonders bevorzugt mit 4 Kohlenstoffatomen und insbesondere ein Isobutylrest ist;
- R¹: jeweils unabhängig voneinander ein einbindiger Rest mit 2 bis 6 Kohlenstoffatomen, bevorzugt eine Ethylrest oder ein Phenylrest ist;
mit
- m: = 1 bis 300, bevorzugt 3 bis 200, am bevorzugtesten 5 bis 100;

- n: = 0 bis 300, bevorzugt 0 bis 200, am bevorzugtesten 0 bis 100;
- o: = 0 bis 300, bevorzugt 0 bis 200, am bevorzugtesten 0 bis 100;
mit der Maßgabe, dass
i) die Summe aus m, n und o von 5 bis 250, bevorzugt von 10 bis 200, am bevorzugtesten von 15 bis 100 beträgt; und
ii) die erste an die Startverbindung gebundene Monomereinheit ein Oxypropylenrest 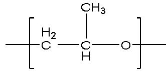 ist, der aus der Ringöffnung von Propylenoxid hervorgegangen ist.

Die allgemeine Schreibweise 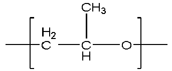 in Formel (2) und in der nachfolgendenden Formel (3) steht sowohl für eine Einheit der Formel 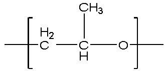 als auch für eine Einheit der Formel 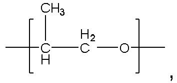 vorzugsweise aber für eine Einheit der Formel

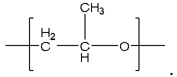

Die allgemeine Schreibweise 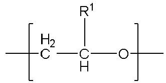 in Formel (2) und in der nachfolgendenden Formel (3) steht sowohl für eine Einheit der Formel 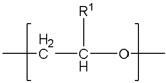 als auch für eine Einheit der Formel 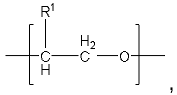 vorzugsweise aber für eine Einheit der Formel

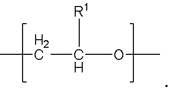

Vorzugsweise wird vor der ersten Epoxidzufuhr der mit dem Starter und dem DMC-Katalysator teilweise befüllte Reaktor z.B. mit Stickstoff inertisiert. Dies geschieht z.B. durch mehrfaches abwechslungsweises Evakuieren und Zuführen von Stickstoff. Es ist vorteilhaft, den Reaktor nach dem letzten Aufdrücken von Stickstoff auf unter 200 mbar zu evakuieren. Die Addition der ersten Menge an Epoxidmonomer findet somit vorzugsweise in den evakuierten Reaktor statt. Die Dosage der Monomere erfolgt vorzugsweise unter Rühren und ggf. Kühlen, um die freiwerdende Reaktionswärme abzuführen und die vorgewählte Reaktionstemperatur einzuhalten. Als Starter dient der mindestens eine Salicylsäureester oder es kann auch ein bereits entsprechend dem erfindungsgemäßen Verfahren hergestellter Polyether als Starter verwendet werden.

Die Umsetzung kann z.B. zwecks Viskositätserniedrigung in einem geeigneten Lösemittel durchgeführt werden. Nach Beendigung der Epoxidaddition folgt vorzugsweise eine Nachreaktion zur Vervollständigung des Umsatzes. Die Nachreaktion kann z.B. durch Weiterreaktion bei Reaktionsbedingungen (also Beibehaltung z.B. der Temperatur) ohne Zugabe von Edukten durchgeführt werden. Der DMC-Katalysator verbleibt üblicherweise im Reaktionsgemisch.

Nicht abreagierte Epoxide und eventuell weitere flüchtige Bestandteile können nach erfolgter Umsetzung durch Vakuumdestillation, Wasserdampf- oder Gasstrippen oder andere Methoden der Desodorierung entfernt werden. Vorzugsweise wird das fertige Produkt abschließend bei <100 °C filtriert, um evtl. vorhandene Trübstoffe zu entfernen.

Es ist optional, zur Stabilisierung der Produkte, Stabilisatoren bzw. Antioxidantien zu verwenden. Hierfür eignen sich z.B. die dem Fachmann bekannten sterisch gehinderten Phenole, kommerziell erhältlich zum Beispiel als Anox^{®} 20, Irganox^{®} 1010 (BASF), Irganox^{®} 1076 (BASF) und Irganox^{®} 1135 (BASF).

Nicht immer ist es möglich, die gewünschte Molmasse des Endpropdukts in nur einem einzigen Alkoxylierungsschritt, zu erreichen. Besonders, wenn lange Polyetherketten angestrebt werden, müssen große Mengen an Epoxidmonomeren addiert werden. Dies lässt die Reaktorgeometrie manchmal nicht zu. Die hergestellten Polyether tragen terminale OH-Gruppen und eignen sich daher ihrerseits als Starter für den Aufbau höhermolekularer Folgeprodukte. Sie stellen im Sinne der Erfindung also ebenfalls potenzielle Vorprodukte und Startverbindungen für die Synthese von Polyethern mit höherer Molmasse dar. Die Alkoxylierungsreaktion in Schritt a) kann also in mehreren Teilschritten erfolgen.

### Reaktoren

Für das erfindungsgemäße Verfahren, insbesondere zur Durchführung von Schritt a), können prinzipiell alle geeigneten Reaktortypen zum Einsatz kommen, die die Reaktion und ihre eventuell vorhandene Wärmetönung beherrschen lassen. Die Reaktionsführung kann in verfahrenstechnisch bekannter Art und Weise kontinuierlich, semi-kontinuierlich oder auch batchweise erfolgen und lässt sich flexibel auf die vorhandenen produktionstechnischen Einrichtungen abstimmen. Neben herkömmlichen Rührkesselreaktoren können auch Strahlschlaufenreaktoren mit Gasphase und internen Wärmetauscherrohren, wie in WO 01/062826 beschrieben, verwendet werden. Darüber hinaus können gasphasenfreie Loop-Reaktoren eingesetzt werden.

### Schritt b)

Der mindestens eine Polyether aus Schritt a) wird in Schritt b) mit mindestens einem Polyamin, das mindestens zwei Aminogruppen ausgewählt aus der Gruppe bestehend aus primären und sekundären Aminogruppen trägt, in einer Amidierungsreaktion zu mindestens einem Polyetheramidamin umgesetzt. Bei der Amidierungsreaktion werden die Estergruppen unter Abspaltung von Alkohol der Formel R-OH, wobei R wie oben definiert ist, in Amidgruppen überführt. Dabei wird der abgespaltene Alkohol R-OH destillativ aus dem Reaktionsgefäß entfernt. Die Amidierung findet im Temperaturbereich von 80 °C bis 250 °C, bevorzugt von 100 °C bis 200 °C, besonders bevorzugt von 120 °C bis 180 °C statt. Vorzugsweise wird das Reaktionsgefäß vor der Umsetzung mit Stickstoff inertisiert. Die Reaktion und destillative Entfernung des Alkohols R-OH kann wahlweise bei Normaldruck oder im Vakuum stattfinden. Bevorzugt wird die Umsetzung bei Normaldruck begonnen und der Innendruck mit Hilfe einer Vakuumpumpe während der Umsetzung schrittweise auf <100 mbar abgesenkt.

Es ist bevorzugt, dass die Umsetzung in Gegenwart von mindestens einem basischen Katalysator erfolgt, der optional im Anschluss mit mindestens einer Säure neutralisiert wird. Es ist dabei weiterhin bevorzugt, dass der pk_{B}-Wert des mindestens einen basischen Katalysators unterhalb der pK_{B}-Werte des umgesetzten Polyamins liegt und bevorzugt weniger als 1,0, besonders bevorzugt weniger als 0,5 beträgt. Vorzugsweise ist der mindestens eine basische Katalysator ausgewählt wird aus der Gruppe bestehend aus Alkalihydroxiden, Erdalkalihydroxid, Alkalialkoholat, starken Aminbasen und Guanidinverbindungen. Besonders bevorzugt wird der mindestens eine basische Katalysator ausgewählt aus der Gruppe bestehen aus Natriumhydroxid, Kaliumhydroxid, Natriumethanolat, Kaliumethanolat, Natriummethanolat und Kaliummethanolat. Die Alkalihydroxide können wahlweise in fester Form als auch als wässerige Lösungen verwendet werden. Die Alkalimethanolate und Alkaliethanolate können in fester Form oder als methanolische bzw. ethanolische Lösungen eingesetzt werden. Bevorzugt beträgt die Konzentration des basischen Katalysators 0,1 Gew.-% bis 2,0 Gew.-%, besonders bevorzugt 0,2 Gew.-% bis 1,5 Gew.-%, ganz besonders bevorzugt 0,3 Gew.-% bis 1,0 Gew.-% bezogen auf die Einsatzmenge des Polyethers. Die prozentualen Angaben beziehen sich jeweils auf die Menge an festem, d.h. nicht gelösten Katalysator. Die Verwendung eines basischen Katalysators erlaubt die rasche und quantitative Umwandlung der Estergruppe in eine Amidgruppe unter Abspaltung von R-OH. Das in CN 113121815 A genannte Problem der sterischen Hinderung bei Verwendung von Hydroxycarbonsäureestern auf Basis von längerkettigen Alkoholen wie Isobutanol wird auf diese Weise gelöst.

Als Polyamin kann prinzipiell jede Verbindung, die mindestens zwei Aminogruppen ausgewählt aus der Gruppe bestehend aus primären und sekundären Aminogruppen trägt, eingesetzt werden. Bevorzugt wird das mindestens eine Polyamin ausgewählt aus der Gruppe bestehend aus Ethylendiamin, 1,3-Propylendiamin, 1,6-Hexamethylendiamin, Isophorondiamin, Diethylentriamin (DETA), Triethylentetramin (TETA), Tetraethylenpentamin (TEPA), Pentaethylenhexamin (PEHA) und Polyethylenimin. Auch beliebige Mischungen dieser Amine können verwendet werden.

Das molare Verhältnis des mindestens einen Polyethers zum mindestens einen Polyamin wird stets so gewählt, dass nach der Amidierungsreaktion mindestens eine nicht zur Amidgruppe gehörende N-H Gruppe für die folgende Phosphonierungsreaktion (Schritt c)) zur Verfügung steht. Im Schritt b) wird also das molare Verhältnis des mindestens einen Polyethers zum mindestens einen Polyamin stets so gewählt, dass neben der mindestens einen amidischen N-H Gruppe, die im Zuge der Umsetzung in Schritt b) entsteht, mindestens eine aminische N-H Gruppe für die nachfolgende Umsetzung in Schritt c) zur Verfügung steht.

Vorzugsweise wird der mindestens eine Polyether mindestens äquimolar, bevorzugt jedoch in einem molaren Überschuss bezogen auf das mindestens eine Polyamin eingesetzt, um den Gehalt an nicht umgesetzten Polyamin zu reduzieren. Vorzugsweise beträgt daher das molare Verhältnis der Gesamtheit der Polyether zur Gesamtheit der Polyamine von 1,00:1 bis 1,80:1, bevorzugt von 1,05:1 bis 1,60:1, besonders bevorzugt von 1,10:1 bis 1,40:1.

Die Amidierungsreaktion kann prinzipiell an jeder primären oder sekundären Aminogruppe des Polyamins stattfinden. So stellt das entstehende Polyetheramidamin ein Gemisch aus einfach und mehrfach amidierten Polyaminen dar. Die Reaktionsbedingungen werden erfindungsgemäß so gewählt, dass praktisch alle Estergruppen des Polyethers unter Abspaltung von R-OH in die jeweilige Amidgruppe umgewandelt werden. Geringe Konzentration von nicht abreagiertem Polyamin stören nicht.

Am Ende von Schritt b) kann der basische Katalysator optional mit einer beliebigen Säure neutralisiert werden. Erfindungsgemäß bevorzugt ist die Neutralisation mit einer Carbonsäure, insbesondere Milchsäure. Die entstehenden Salze können im Reaktionsprodukt verbleiben.

Die erfindungsgemäß hergestellten Polyetheramidamine sind vorzugsweise Verbindungen der Formel (3), 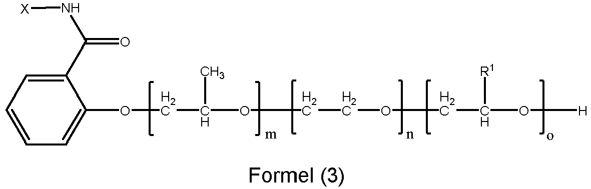 wobei R¹, m, n und o die zuvor definierten Bedeutungen haben und X einen Stickstoff enthaltenden Rest darstellt, der sich vom eingesetzten Polyamin ableitet.

Je nach eingesetztem Polyamin können durch die Verwendung des erfindungsgemäß bevorzugten molaren Überschusses des in Schritt b) eingesetzten Polyethers bezogen auf das Polyamin auch ein oder auch mehrere Polyetherreste über jeweils Amidgruppe an das Polyamin chemisch gebunden sein. Der Rest X kann also neben primären und sekundären Aminogruppen auch amidverknüpfte Polyetherreste enthalten.

### Schritt c)

Das mindestens eine Polyetheramidamins aus Schritt b) wird erfindungsgemäß mit mindestens einem Aldehyd und Phosphonsäure zu mindestens einer Polyetheramidaminphosphonsäure umgesetzt.

Vorzugsweise findet die Umsetzung in Gegenwart von mindestens einer Säure mit einem pKs-Wert unterhalb des pKs-Werts von Phosphonsäure, bevorzugt mit einem pKs-Wert von weniger als 1,5, besonders bevorzugt von weniger als 1,0 durchgeführt wird. Es ist zwar nicht erforderlich, neben Phosphonsäure eine weitere Säure einzusetzen, es zeigt sich aber, dass der Umsatz dadurch stark erhöht wird.

Die mindestens eine Säure wird vorzugsweise ausgewählt aus der Gruppe bestehend aus Salzsäure, Schwefelsäure, p-Toluolsulfonsäure, Methansulfonsäure, Trifluormethansulfonsäure und Phosphorsäure. Bevorzugt werden diese Säuren in Form ihrer wässerigen Lösungen zugefügt. Ganz besonders bevorzugt ist die Verwendung von konzentrierter Salzsäure.

Vorzugsweise wird das mindestens eine Polyetheramidamin aus Schritt b) unter Rühren mit der mindestens einen Säure versetzt. Die Einsatzmenge richtet dabei sich nach der Anzahl der zu phosphonierenden Aminogruppen des Polyetheramidamins, wobei das molare Verhältnis von aciden Protonen der Säure zu den aminischen N-H Gruppen der Gesamtheit der Polyetheramidamine 0,3:1 bis 1,5:1, bevorzugt 0,7:1 bis 1,3:1, besonders bevorzugt 0,9:1 bis 1,1:1 beträgt. Eine sekundäre Aminogruppe weist dabei genau eine solche aminische N-H-Gruppe auf, eine primäre Aminogruppe dagegen genau zwei solcher aminischen N-H-Grupppen. Die NH-Gruppen, die Bestandteil der Amidfunktionen des eingesetzten Polyetheramidamins sind, werden dabei nicht mit einbezogen. Die Zugabe der Säure kann bei einer beliebigen Temperatur, bevorzugt zwischen 20 °C und 90 °C durchgeführt werden.

Anschließend wird dem Reaktionsgemisch unter Rühren Phosphonsäure, auch phosphorige Säure genannt, zugegeben. Die Einsatzmenge richtet sich vorzugsweise nach der Anzahl der zu phosphonierenden Aminogruppen des mindestens einen Polyetheramidamins. Vorzugsweise beträgt das molare Verhältnis von Phosphonsäure zu den aminischen N-H Gruppen des Gesamtheit der Polyetheramidamine 0,3:1 bis 1,5:1, bevorzugt 0,7:1 bis 1,3:1, besonders bevorzugt 0,9:1 bis 1,1:1 beträgt. Die NH-Gruppen, die Bestandteil der Amidfunktionen des eingesetzten Polyetheramidamins sind, werden dabei nicht mit einbezogen. Besonders bevorzugt wird die optional zusätzlich verwendete Säure äquimolar bezogen auf die eingesetzte Menge an Phosphonsäure eingesetzt. Die Zugabe der Phosphonsäure kann in reiner Form als Feststoff oder als wässerige Lösung und wahlweise in einer Portion oder portionsweise und zeitlich gestreckt bei einer beliebigen Temperatur zwischen 20 °C und 90 °C durchgeführt werden. Bevorzugt erfolgt die Zugabe als feste Phosphonsäure portionsweise innerhalb von 10 min bis 30 min bei 30 °C bis 70 °C.

Das Reaktionsmisch wird anschließend auf vorzugsweise 90 °C bis 100 °C erwärmt und mit mindestens einem Aldehyd umgesetzt. Die Einsatzmenge an Aldehyd richtet sich nach der Anzahl der zu phosphonierenden Aminogruppen des Polyetheramidamins. Vorzugsweise beträgt das molare Verhältnis der Gesamtheit der Aldehyde zu den aminischen N-H Gruppen der Gesamtheit der Polyetheramidamine 0,3:1 bis 1,5:1, bevorzugt 0,7:1 bis 1,3:1, besonders bevorzugt 0,9:1 bis 1,1:1. Die NH-Gruppen, die Bestandteil der Amidfunktionen des eingesetzten Polyetheramidamins sind, werden dabei nicht mit einbezogen. Besonders bevorzugt wird Aldehyd äquimolar bezogen auf die Menge an Phosphonsäure eingesetzt. Bevorzugt erfolgt die Zugabe von Aldehyd kontinuierlich oder portionsweise innerhalb von 30 min. Das Reaktionsgemisch wird vorzugsweise einige Stunden bei 90 °C bis 100 °C bis zum vollständigen Umsatz gerührt. Es ist bevorzugt, dass der Aldehyd Formaldehyd ist. Hier können unterschiedliche Formaldehydquellen verwendet werden. Als Quelle für Formaldehyd eignen sich beispielsweise eine wässerige Lösung von Formaldeyhd (Formalin-Lösung), festes Paraformaldehyd oder 1,3,5-Trioxan. Formaldehyd kann wahlweise als wässerige Lösung (Formalin-Lösung) oder in Form von festem Paraformaldehyd zugefügt werden. Besonders bevorzugt ist die Verwendung von festem Paraformaldehyd und wässerigen Formaldehydlösungen im Konzentrationsbereich von 30 Gew.-% bis 45 Gew.-% Formaldehyd.

In einem abschließenden Destillationsschritt werden Wasser und evtl. Reste an Formaldehyd und Säure vorzugsweise entfernt. Bevorzugt findet die Destillation bei 80 °C bis 120 °C unter Vakuum bis <20 mbar Innendruck statt, bis kein Destillat mehr erkennbar ist. Die so hergestellte wasserfreie Polyetheramidaminphosphonsäure ist ein meist bräunliches Produkt und kann entweder abgefüllt oder optional weiterverarbeitet werden gemäß Schritt d) und/oder Schritt e).

In der erfindungsgemäßen Phosphonierungsreaktion werden die im Rest X der Formel (3) vorhandenen primären und/oder sekundären Aminogruppen zu den korrespondierenden Phosphonsäuregruppen umgesetzt. Diese Umsetzung kann an sekundären Aminogruppen maximal einfach, an primären Aminogruppen maximal zweifach erfolgen. Bei der Umsetzung werden Struktureinheiten der Formel (4) erhalten:

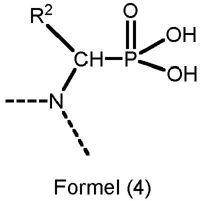

Das in Formel (4) dargestellte Stickstoffatom stammt dabei aus der umgesetzten primären bzw. sekundären Aminogruppe. Der dargestellte Rest R² stammt aus dem umgesetzten Aldehyd R²-CHO, wobei CHO für eine Aldehydgruppe steht und R² jeweils unabhängig voneinander für einen organische Rest oder Wasserstoff, bevorzugt für einen Alkylrest mit 1 bis 4 Kohlenstoffatomen oder Wasserstoff, besonders bevorzugt für Wasserstoff.

In einer besonders bevorzugten Ausführungsform sind die erfindungsgemäß hergestellten Polyetheramidaminphosphonsäuren dadurch gekennzeichnet, dass der Rest X aus Formel (3) mindestens eine, bevorzugt mindestens zwei der folgenden Struktureinheiten ausgewählt aus Formel (4a), (4b) und (4c) enthält:

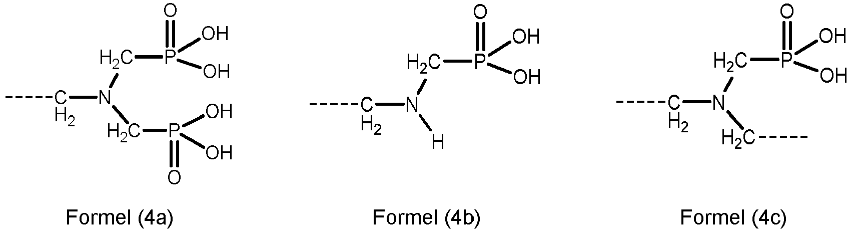

### Optionaler Schritt d)

Im optionalen Schritt d) des Verfahrens findet das Lösen der mindestens einen Polyetheramidaminphosphonsäure aus Schritt c) in Wasser statt. Die Polyetheramidaminphosphonsäure aus Schritt c) kann also je nach Anwendung beliebig in Wasser gelöst werden. Bevorzugt sind Lösungen mit einem Gehalt an Polyetheramidaminphosphonsäure von 10 Gew.-% bis 80 Gew.-%, noch bevorzugter von 20 Gew.-% bis 70 Gew.-% ganz besonders bevorzugt von 25 Gew.-% bis 60 Gew.-%.

### Optionaler Schritt e)

Im optionalen Schritt e) des Verfahrens findet eine vollständige oder teilweise Neutralisation der mindestens einen Polyetheramidaminphosphonsäure aus Schritt c) oder deren wässerige Lösung aus Schritt d) mit mindestens einer Base zu mindestens einem Polyetheramidaminphosphonatsalz oder dessen wässerige Lösung;

Vorzugsweise wird die Base ausgewählt aus der Gruppe bestehend aus Alkalihydroxiden, Erdalkalihydroxiden und basischen Stickstoffverbindungen. Besonders bevorzugt wird die Base ausgewählt aus der Gruppe bestehend aus Natriumhydroxid, Kaliumhydroxid, Ethanolamin, Isopropanolamin, Diethanolamin und Diisopropanolamin. Die Basen können entweder einzeln oder im beliebigen Gemisch eingesetzt werden. So entstehen wässerige Salzlösungen der Polyetheramidaminphosphonsäure, deren pH-Wert je nach Anwendungszweck über die Zugabemenge an Base beliebig einstellbar ist. Vorzugsweise wird die Menge an Base so gewählt, dass die Salzlösungen der Polyetheramidaminphosphonsäure (Q) einen pH-Wert von 2 bis 9, bevorzugt von 3 bis 7, besonders bevorzugt von 4 bis 6 aufweisen. Bevorzugt sind dabei Lösungen mit einem Gehalt an Polyetheramidaminphosphonsäure (unabhängig ob diese als Säure oder als gelöstes Salz vorliegt) von 10 Gew.-% bis 80 Gew.-%, besonders bevorzugt von 20 Gew.-% bis 70 Gew.-% und ganz besonders bevorzugt von 25 Gew.-% bis 60 Gew.-%.

### Verfahrensprodukte

Ein weiterer Gegenstand der Erfindung sind die Produkte herstellbar nach dem erfindungsgemäßen Verfahren.

Gegenstand der vorliegenden Erfindung sind damit auch die bereits beschriebenen Polyetheramidaminphosphonsäuren, Polyetheramidaminphosphonatsalze und deren wässerige Lösungen, die nach dem erfindungsgemäßen Verfahren hergestellt werden.

Vorzugsweise handelt es sich bei den Produkten um wässerige Lösungen von Polyetheramidaminphosphonsäuren und/oder Polyetheramidaminphosphonatsalzen mit einem Gesamtgehalt an diesen Verbindungen von 10 Gew.-% bis 80 Gew.-%, besonders bevorzugt von 20 Gew.-% bis 70 Gew.-% und ganz besonders bevorzugt von 25 Gew.-% bis 60 Gew.-%, wie oben bereits erläutert. Der Massenanteil der Gesamtheit der Polyetheramidaminphosphonsäuren und/oder Polyetheramidaminphosphonatsalzen in der wässerigen Lösung beträgt also von 10 % bis 80 %, besonders bevorzugt von 20 % bis 70 % und ganz besonders bevorzugt von 25 % bis 60 % bezogen auf die Gesamtmasse der wässerigen Lösung.

Vorzugsweise handelt es sich bei den Produkten um wässerige Lösungen von Polyetheramidaminphosphonsäuren und/oder Polyetheramidaminphosphonatsalzen mit einem pH-Wert von 2 bis 9, bevorzugt von 3 bis 7, besonders bevorzugt von 4 bis 6.

### Dispergiermittel und hydraulisch abbindende Zusammensetzungen

Die Verfahrensprodukte eignen sich als Dispergiermittel, insbesondere als Dispergiermittel in hydraulisch abbindenden Zusammensetzungen. Sie zeichnen sich insbesondere dadurch aus, dass sie nicht zu einer verzögerten Abbindung von hydraulisch abbindenden Zusammensetzungen führen.

Ein weiterer Gegenstand der Erfindung ist daher die Verwendung der erfindungsgemäßen Produkte als Dispergiermittel, insbesondere die Verwendung als Dispergiermittel in hydraulisch abbindenden Zusammensetzungen.

Dispergiermittel sind dabei Additive, die das Dispergieren, also die optimale Durchmischung von mindestens zwei, eigentlich nicht mischbaren Phasen ermöglichen oder stabilisieren. Dazu gehören die Bildung von Emulsionen und besonders der Suspensionen, die beide zu den sogenannten Dispersionen zählen. Während Emulsionen eine feine Durchmischung zweier Flüssigkeiten, wie beispielsweise Öl und Wasser sind, handelt es sich bei einer Suspension um eine genügend stabile Aufschwemmung von sehr kleinen Feststoffen in einer Flüssigkeit. In Beschichtungsstoffen können dies Pigmente oder Füllstoffe sein, die in eine Flüssigkeit (Dispergiermedium, auch Mahlgut) eingearbeitet sind.

Unter einer hydraulisch abbindenden Zusammensetzung wird eine Zusammensetzung verstanden, die, in Anwesenheit bzw. bei Zugabe von (zusätzlichem) Wasser (Zugabewasser, Anmachwasser) aushärtet. Die Gesamtwassermenge der Zusammensetzung ergibt sich aus der Summe der Menge des Zugabewassers und der Menge des Wassers, das in der erfindungsgemäßen Zusammensetzung, insbesondere der Emulsion, enthalten ist. Für die Aushärtung ist eine Umsetzung des Wassers mit dem hydraulischen Bindemittel verantwortlich. Dabei findet üblicherweise der Aufbau einer Kristallstruktur unter Einlagerung des Wassers als Kristallwasser statt. Beispiele für hydraulische Bindemittel sind Zement oder gebrannter Gips. Das bevorzugte hydraulische Bindemittel ist dabei Zement. Vorzugsweise ist die hydraulisch abbindende Zusammensetzung also eine hydraulisch abbindende Zementmischung, insbesondere Mörtel, Estrich oder Beton. Diese Zementmischungen enthalten neben dem Bindemittel Zement noch Zuschlagstoffe, wie beispielsweise Sand, Kies, Kalkstein oder Kreide, mit unterschiedlicher maximaler Partikelgröße und Partikelgrößenverteilung. In der Regel werden hydraulisch abbindende Zementmischungen als Mörtel bezeichnet, wenn die maximale Partikelgröße der Zuschlagsstoffe unter 4 mm, für Estriche bis zu 8 mm und bei Betonen größer 8 mm beträgt. Ungeachtet dessen, enthalten diesbezügliche hydraulisch abbindende Zementmischungen mit Hinblick auf ihre Applikation Wasser und können ferner weitere Additive, Zusatzmittel und/oder weitere hydraulisch wirkende mineralische Zusätze, wie beispielsweise - aber nicht ausschließlich - Puzzolane oder Flugasche, für spezielle Anwendungen enthalten.

Ein weiterer Gegenstand der Erfindung sind daher auch hydraulisch abbindende Zusammensetzungen, enthaltend die Komponenten:
a) mindestens ein hydraulisches Bindemittel, vorzugsweise Zement;
b) mindestens ein Produkt herstellbar nach dem erfindungsgemäßen Verfahren;
c) vorzugsweise mindestens einen Zuschlagsstoff ausgewählt aus der Gruppe bestehend aus Sand, Kies, Splitt, Brechsand, Kalkstein und Kreide;
d) vorzugsweise zusätzliches Wasser; und
e) vorzugsweise mindestens ein Fließmittel, insbesondere auf Basis von Polycarboxylatether.

Es ist bevorzugt, dass die hydraulisch abbindende Zusammensetzung
- 100 Gewichtsteile der Komponente a);
- 0,1 bis 10, vorzugsweise 0,5 bis 5 Gewichtsteile der Komponente b);
- 100 bis 600, vorzugsweise 200 bis 400 Gewichtsteile der Komponente c);
- 20 bis 100, vorzugsweise 30 bis 70 Gewichtsteile Komponente d); und
- 0,1 bis 10, vorzugsweise 0,5 bis 5 Gewichtsteile der Komponente e)
enthält.

Besonders bevorzugt verwendet man die erfindungsgemäßen Produkte in hydraulisch abbindenden Zementmischungen, indem man während der Herstellung eines applikationsfähigen Mörtels, Estrichs bzw. Betons in einem Mischer das erfindungsgemäße Produkt zusammen mit dem Zugabewasser und optional zusammen mit dem Fließmittel zugibt, alternativ kann man das erfindungsgemäße Produkt in einem Zug oder portionsweise der Mischung zusetzen und durch Mischen weitgehend gleichmäßig einarbeiten.

Fließmittel sind dabei besonders verflüssigend wirkende Zusatzmittel. Fließmittel bewirken eine Verminderung des Wasseranspruchs und/oder eine Verbesserung der Verarbeitbarkeit. Vorzugsweise werden die Fließmittel ausgewählt aus der Gruppe bestehend aus Naphthalinsulfonat, Melaminsulfonat, Ligninsulfonat und Polycarboxylatether. Besonders bevorzugt Fließmittel sind Polycarboxylatether eingesetzt. Diese Fließmittel sind dem Fachmann bekannt.

Besonders vorteilhaft ist die Verwendung des erfindungsgemäßen Produkts als Zusatz in hydraulisch abbindenden Zementmischungen, insbesondere in Beton (darunter auch Gasbeton, Unterwasserbeton, Stahlbeton, Textilbeton bzw. Textilfaserbeton) Estrich, Mörtel (darunter auch 2-Komponenten-Mörtel, Betoninstandsetzungsmörtel) um nur einige Beispiele zu nennen. Im Falle eines 2-Komponenten-Mörtels wird die zweite Komponente in flüssiger Form zur ersten Komponente (in der Regel einer Trockenmörtelmischung) direkt vor der Applikation zugegeben. Es kann sich hierbei beispielsweise um dem Fachmann bekannte Polymerlatex-Emulsionen zu Erhöhung der Elastizität der hydraulisch abbindenden Zementmischung handeln.

Zusammenfassend lässt sich also festhalten, dass die hydraulisch abbindende Zusammensetzung besonders bevorzugt ein Mörtel, ein Estrich oder ein Beton ist.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele:

### Allgemeine Methoden:

### Gel-Permeations-Chromatographie (GPC):

GPC-Messungen zur Bestimmung der Polydispersität (M_{w}/Mₙ), der gewichtsmittleren Molmasse (M_{w}) und der zahlenmittleren Molmasse (Mₙ) der Polyether (E) wurden unter den folgenden Messbedingungen durchgeführt: Säulenkombination SDV 1000/10000 Å (Länge 65 cm), Temperatur 30 °C, THF als mobile Phase, Fließrate 1 ml/min, Probenkonzentration 10 g/l, RI-Detektor, Auswertung gegen Polypropylenglykol-Standard.

### Bestimmung der Säurezahl:

Die Säurezahlbestimmung wurde nach einem Titrationsverfahren in Anlehnung an die DIN EN ISO 2114 durchgeführt.

### Bestimmung der Hydroxylzahl (OH-Zahl):

Hydroxylzahlen wurden nach der Methode DGF C-V 17 a (53) der Deutschen Gesellschaft für Fettwissenschaft bestimmt. Dabei wurden die Proben mit Essigsäureanhydrid in Gegenwart von Pyridin acetyliert und der Verbrauch an Essigsäureanhydrid durch Titration mit 0,5 n Kalilauge in Ethanol gegen Phenolphthalein bestimmt.

### Synthesebeispiele:

### Schritt a): Herstellung der Polyether durch Alkoxylierungsreaktion

### Beispiel a1 (erfindungsgemäß) - Alkoxylierung von Isobutylsalicylat - mit Propylenoxid gestartet:

In einem 5-Liter-Autoklaven wurden 284,2 g Isobutylsalicylat und 0,60 g Zn/Co-DMC-Katalysator unter Stickstoff vorgelegt. Unter Rühren wurde auf 90 °C aufgeheizt und der Reaktor bis auf einen Innendruck von 30 mbar evakuiert, um vorhandene flüchtige Inhaltsstoffe destillativ zu entfernen. Zum Aktivieren des Katalysators, erkennbar an einem merklichen Druckabfall im Reaktor, und für den Propylenoxid-Startblock wurde die Innentemperatur auf 135 °C erhöhrt und wurden 170 g Propylenoxid unter Rühren zugegeben. Nach einer 15 minütigen Zwischenreaktion wurden anschließend gleichzeitig weitere 679 g Propylenoxid und 1867 g Ethylenoxid kontinuierlich unter Rühren und Kühlen bei 135 °C und max. 1,4 bar Reaktorinnendruck (absolut) über 2,5 Stunden zudosiert. Nach einer Nachreaktion von 15 min bei 135°C wurde das Reaktionsgemisch entgast. Flüchtige Anteile wie restliches Ethylenoxid und Propylenoxid wurden im Vakuum destillativ entfernt. Das Produkt wurde auf 120 °C abgekühlt, mit 1,5 g Irganox^{®} 1076 versetzt und bei <70 °C abgekühlt. Es wurden 3 kg des bei Raumtemperatur flüssigen, farblosen Polyethers erhalten. Der Polyether hat eine OH-Zahl von 28,2 mg KOH/g und eine Säurezahl von 0,1 mg KOH/g und laut GPC-Analyse ein M_{w} von 2007 g/mol, ein Mₙ von 1906 g/mol und eine Polydispersität M_{w}/Mₙ von 1,05.

### Beispiel a2 (erfindungsgemäß) - Alkoxylierung von Isobutylsalicylat - mit Propylenoxid gestartet:

In einem 5-Liter-Autoklaven wurden 583,5 g Isobutylsalicylat und 0,90 g Zn/Co-DMC-Katalysator unter Stickstoff vorgelegt. Unter Rühren wurde auf 90 °C aufgeheizt und der Reaktor bis auf einen Innendruck von 30 mbar evakuiert, um vorhandene flüchtige Inhaltsstoffe destillativ zu entfernen. Zum Aktivieren des Katalysators, erkennbar an einem merklichen Druckabfall im Reaktor, und für den Propylenoxid-Startblock wurde die Innentemperatur auf 135 °C und 349 g Propylenoxid unter Rühren zugegeben. Nach einer 15-minütigen Zwischenreaktion wurden anschließend gleichzeitig weitere 349 g Propylenoxid und 1719 g Ethylenoxid kontinuierlich unter Rühren und Kühlen bei 135 °C und max. 1,3 bar Reaktorinnendruck (absolut) über 1,25 Stunden zudosiert. Nach einer Nachreaktion von 25 min bei 135°C wurde das Reaktionsgemisch entgast. Flüchtige Anteile wie restliches Ethylenoxid und Propylenoxid wurden im Vakuum destillativ entfernt. Das Produkt wurde auf 120 °C abgekühlt, mit 1,5 g Irganox^{®} 1076 versetzt und bei <70 °C abgekühlt. Es wurden 3 kg des bei Raumtemperatur flüssigen, farblosen Polyethers erhalten. Der Polyether hat eine OH-Zahl von 55,9 mg KOH/g und eine Säurezahl von 0,1 mg KOH/g und laut GPC-Analyse ein M_{w} von 917 g/mol, ein Mₙ von 870 g/mol und eine Polydispersität M_{w}/Mₙ von 1,05.

*Beispiel a3 (nicht erfindungsgemäß)* - *Alkoxylierung von Methylsalicylat - mit Propylenoxid gestartet:* In einem 5-Liter-Autoklaven wurden 328 g Methylsalicylat und 0,60 g Zn/Co-DMC-Katalysator unter Stickstoff vorgelegt. Unter Rühren wurde auf 90 °C aufgeheizt und der Reaktor bis auf einen Innendruck von 30 mbar evakuiert, um vorhandene flüchtige Inhaltsstoffe destillativ zu entfernen. Die Innentemperatur wurde auf 135 °C erhöht und zum Aktivieren des Katalysators wurden innerhalb von 3,5 h portionsweise nach und nach insgesamt 88 g Propylenoxid zugegeben. Der Druck stieg dabei schrittweise auf 1,2 bar (absolut) an, ohne dass ein Druckabfall oder einsetzende Wärmetönung auf ein Anspringen der Reaktion hinwies. Die Reaktortemperatur wurde daraufhin auf 140 °C erhöht, jedoch eine Aktivierung des DMC-Katalysators war weiterhin nicht möglich. Der Versuch wurde nach 1 h bei 140 °C erfolglos abgebrochen.

### Beispiel a4 (nicht erfindungsgemäß) - Alkoxylierung von Ethylsalicylat - mit Propylenoxid gestartet:

In einem 5-Liter-Autoklaven wurden 354,9 g Ethylsalicylat und 0,60 g Zn/Co-DMC-Katalysator unter Stickstoff vorgelegt. Unter Rühren wurde auf 90°C aufgeheizt und der Reaktor bis auf einen Innendruck von 30 mbar evakuiert, um vorhandene flüchtige Inhaltsstoffe destillativ zu entfernen. Die Innentemperatur wurde auf 135 °C erhöht und zum Aktivieren des Katalysators wurden innerhalb von 6 h portionsweise nach und nach insgesamt 93 g Propylenoxid zugegeben. Der Druck stieg dabei schrittweise auf 1,2 bar (absolut) an, ohne dass ein Druckabfall oder einsetzende Wärmetönung auf ein Anspringen der Reaktion hinwies. Eine Aktivierung des DMC-Katalysators war nicht möglich und der Versuch wurde erfolglos abgebrochen.

### Beispiel a5 (nicht erfindungsgemäß) - Alkoxylierung von Isobutylsalicylat- mit Ethylenoxid gestartet:

In einem 5-Liter-Autoklaven wurden 300,0 g Isobutylsalicylat und 0,39 g Zn/Co-DMC-Katalysator unter Stickstoff vorgelegt. Unter Rühren wurde auf 90 °C aufgeheizt und der Reaktor bis auf einen Innendruck von 20 mbar evakuiert, um vorhandene flüchtige Inhaltsstoffe destillativ zu entfernen. Zum Aktivieren des Katalysators wurden der Reaktorinhalt auf 135 °C erwärmt. Innerhalb von 15 min wurden 54 g Ethylenoxid zugegeben. Der Druck stieg dabei auf 2,8 bar (absolut) an. Der Ansatz wurde 30 min gerührt, ohne dass ein Druckabfall oder eine Wärmetönung erkennbar war. Die Innentemperatur wurde auf 140 °C erhöht und der Ansatz weitere 1,5 h gerührt. Eine Aktivierung des DMC-Katalysators war weiterhin nicht möglich und der Versuch wurde erfolglos abgebrochen.

### Schritt b): Herstellung der Polyetheramidamine durch Amidierungsreaktion

### Beispiel b1 (erfindungsgemäß) - Amidierung mit Triethylentetramin:

In einem 2-Liter-Reaktionsgefäß wurden 500 g des Polyethers aus Beispiel a1 und 9,0 g Natriummethanolat-Lösung (30 % in Methanol) vorgelegt. Nach dem Inertisieren mit Stickstoff wurde das Gemisch auf 90 °C erwärmt und unter Vollvakuum innnerhalb von 30 min bei <20 mbar Methanol abdestilliert. Anschließend wurden 27,4 g Triethylentetramin (TETA) bei 90 °C zugefügt und das Gemisch auf die Reaktionstemperatur von 140 °C erwärmt. In 5 h Nachreaktion bei 140 °C und Vollvakuum wurde das entstehende Isobutanol laufend abdestilliert. Nach 5 h war die Destillation beendet. Der Ansatz wurde auf 90 °C gekühlt und durch Zugabe von 4,5 g Milchsäure (90 % in Wasser) neutralisiert. Nach 10 min rühren wurde das fertige Polyetheramidamin auf <70 °C abgekühlt und abgelassen. Gemäß ¹³C-NMR-Spektrum wurde Isobutanol quantitativ entfernt und der Isobutylester vollständig zum gewünschten Amid umgesetzt.

### Beispiel b2 (erfindungsgemäß) - Amidierung mit Diethylentriamin:

In einem 2-Liter-Reaktionsgefäß wurden 500,3 g des Polyethers aus Versuch a1 und 8,9 g Natriummethanolat-Lösung (30 % in Methanol) vorgelegt. Nach dem Inertisieren mit Stickstoff wurde das Gemisch auf 90 °C erwärmt und unter Vollvakuum innnerhalb von 30 min bei <20 mbar Methanol abdestilliert. Anschließend wurden 21,0 g Diethylentriamin (DETA) bei 90 °C zugefügt und das Gemisch auf die Reaktionstemperatur von 140 °C erwärmt. In 5 h Nachreaktion bei 140 °C und Vollvakuum wurde das entstehende Isobutanol laufend abdestilliert. Der Ansatz wurde auf 90 °C gekühlt und durch Zugabe von 14,4 g Milchsäure (90 % in Wasser) neutralisiert. Nach 10 min rühren wurde das fertige Polyetheramidamin auf <70 °C abgekühlt und abgelassen. Gemäß ¹³C-NMR-Spektrum wurde Isobutanol quantitativ entfernt und der Isobutylester vollständig zum gewünschten Amid umgesetzt.

### Beispiel b3 (erfindungsgemäß) - Amidierung mit Ethylendiamin:

In einem 2-Liter-Reaktionsgefäß wurden 500 g des Polyethers aus Versuch a1 und 8,7 g Natriummethanolat-Lösung (30 % in Methanol) vorgelegt. Nach dem Inertisieren mit Stickstoff wurde das Gemisch auf 90 °C erwärmt und unter Vollvakuum innnerhalb von 30 min bei <20 mbar Methanol abdestilliert. Anschließend wurden 14,7 g Ethylendiamin bei 90 °C zugefügt und das Gemisch auf die Reaktionstemperatur von 160 °C erwärmt. In 4 h Nachreaktion bei 160 °C und Vollvakuum wurde das entstehende Isobutanol laufend abdestilliert. Der Ansatz wurde auf 90 °C gekühlt und durch Zugabe von 4,4 g Milchsäure (90 % in Wasser) neutralisiert. Nach 10 min rühren wurde das fertige Polyetheramidamin auf <70 °C abgekühlt und abgelassen. Gemäß ¹³C-NMR-Spektrum wurde Isobutanol quantitativ entfernt und der Isobutylester vollständig zum gewünschten Amid umgesetzt.

### Beispiel b4 (erfindungsgemäß) - Amidierung mit Hexamethylendiamin:

In einem 2-Liter-Reaktionsgefäß wurden 500 g des Polyethers aus Versuch a1 und 9,0 g Natriummethanolat-Lösung (30 % in Methanol) vorgelegt. Nach dem Inertisieren mit Stickstoff wurde das Gemisch auf 90 °C erwärmt und unter Vollvakuum innnerhalb von 30 min bei <20 mbar Methanol abdestilliert. Anschließend wurden 27,0 g Hexamethylendiamin bei 90 °C zugefügt und das Gemisch auf die Reaktionstemperatur von 140 °C erwärmt. In 7 h Nachreaktion bei 140 °C und Vollvakuum wurde das entstehende Isobutanol laufend abdestilliert. Der Ansatz wurde auf 90 °C gekühlt und durch Zugabe von 5,0 g Milchsäure (90 % in Wasser) neutralisiert. Nach 10 min rühren wurde das fertige Polyetheramidamin auf <70 °C abgekühlt und abgelassen. Gemäß ¹³C-NMR-Spektrum wurde Isobutanol quantitativ entfernt und der Isobutylester vollständig zum gewünschten Amid umgesetzt

### Beispiel b5 (erfindungsgemäß) - Amidierung mit Ethylendiamin:

In einem 2-Liter-Reaktionsgefäß wurden 500 g des Polyethers aus Versuch a2 und 9,0 g Natriummethanolat-Lösung (30 % in Methanol) vorgelegt. Nach dem Inertisieren mit Stickstoff wurde das Gemisch auf 90 °C erwärmt und unter Vollvakuum innnerhalb von 30 min bei <20 mbar Methanol abdestilliert. Anschließend wurden 29,9 g Ethylendiamin bei 90 °C zugefügt und das Gemisch auf die Reaktionstemperatur von 160 °C erwärmt. In 3,30 h Nachreaktion bei 160 °C und Vollvakuum wurde das entstehende Isobutanol laufend abdestilliert. Der Ansatz wurde auf 90 °C gekühlt und durch Zugabe von 4,5 g Milchsäure (90 % in Wasser) neutralisiert. Nach 10 min rühren wurde das fertige Polyetheramidamin auf <70 °C abgekühlt und abgelassen. Gemäß ¹³C-NMR-Spektrum wurde Isobutanol quantitativ entfernt und der Isobutylester vollständig zum gewünschten Amid umgesetzt.

### Beispiel b6 (erfindungsgemäß) - Amidierung mit Triethylentetramin - Natriumethanolat in EtOH als Katalysator:

In einem 2-Liter-Reaktionsgefäß wurden 500 g des Polyethers aus Versuch a1, 12,7 g Natriumethanolat-Lösung (21 % in Ethanol) und 27,4 g Triethylentetramin (TETA) vorgelegt. Nach dem Inertisieren mit Stickstoff wurde das Gemisch auf die Reaktionstemperatur von 140 °C erwärmt. In 2 h Nachreaktion bei 140 °C und Vollvakuum wurden Ethanol und das entstehende Isobutanol laufend abdestilliert. Nach 2 h war die Destillation beendet. Der Ansatz wurde auf 90 °C gekühlt und durch Zugabe von 3,5 g Milchsäure (90 % in Wasser) neutralisiert. Nach 10 min rühren wurde das fertige Polyetheramidamin auf <70 °C abgekühlt und abgelassen. Gemäß ¹³C-NMR-Spektrum wurde Isobutanol quantitativ entfernt und der Isobutylester vollständig zum gewünschten Amid umgesetzt.

### Schritt c) und gegebenenfalls Schritt d) und gegebenfalls Schritt e): Herstellung der Polyetheramidaminphosphonsäuren, Polyetheramidaminphosphonatsalze oder deren wässerige Lösungen

### Beispiel c1 (erfindungsgemäß):

Als Reaktionsgefäß diente ein 5-Hals-Glaskolben ausgestattet mir Rührer, Vakuumpumpe, Heiz- und Kühlaggregat, wahlweise Rückflusskühler oder Destillationseinrichtung inkl. Destillatvorlage. 500 g des Produkts aus Versuch b1 wurden bei 40 °C vorgelegt und mit Stickstoff inertisiert. 79,0 g HCl (37 % in Wasser) wurden in 5 min zugeben und 15 min gerührt. 65,7 g Phosphonsäure (bei RT fest) wurden portionsweise bei 55-60 °C innerhalb von 10-15 min unter Rühren zugeben. Das Reaktionsgemisch wurde im Anschluss auf 100 °C erwärmt. 24,1 g Paraformaldehyd wurden bei 100 °C Reaktionstemperatur in 5-10 min unter Rühren zugegeben. Anschließend wurde 4 h bei 100 °C gerührt. Das feste Paraformaldehyd ging dabei in Lösung und reagierte ab. Das Reaktionsgemisch färbte sich dabei bräunlich. In 1 h wurde bei 100 °C Wasser, HCl und ggf. Reste von Formaldehyd abdestilliert. Dabei wurde der Druck mittels Vakuumpumpe schrittweise auf <20 mbar abgesenkt. Die Vakuumdestillation wurde 30 min bei 100 °C und <20 mbar fortgesetzt bis kein Destillat mehr kam. Das Reaktionsgemisch wurde auf 70 °C abgekühlt und gemäß Schritt d) mit 575 g Wasser verdünnt. Es entstand eine homogene wässerige Lösung mit einem pH-Wert von 0,7 (pH-Elektrode). Zur Neutralisation gemäß Schritt e) wurden unter Rühren bei 40-70 °C 70,4 g Natronlauge (45 %) zugegeben bis ein pH-Wert von 4,0 bis 4,5 erreicht war. Neutralisationswärme wurde frei. Der Ansatz wurde mit Wasser auf einen Feststoffgehalt von 30 Gew.-% verdünnt und abgelassen. Es wurden 1,95 kg des fertigen homogen gelösten und bräunlichen Polyetheramidaminphosphonats mit einem pH-Wert von 4,4 erhalten.

### Beispiel c2 (erfindungsgemäß):

Analog Beispiel c1 wurden 490 g des Produkts aus aus Versuch b2 bei 40 °C vorgelegt und mit Stickstoff inertisiert. 60,5 g HCl (37 % in Wasser) wurden in 5 min zugeben und 15 min gerührt. 50,2 g Phosphonsäure (bei RT fest) wurden portionsweise bei 45-50 °C innerhalb von 10-15 min unter Rühren zugeben. Das Reaktionsgemisch wurde im Anschluss auf 100 °C erwärmt. 18,4 g Paraformaldehyd wurden bei 100 °C Reaktionstemperatur in 5-10 min unter Rühren zugegeben. Anschließend wurde 4 h bei 100 °C gerührt. Das feste Paraformaldehyd ging dabei in Lösung und das Reaktionsgemisch färbte sich bräunlich. In 1 h wurde bei 100 °C Wasser, HCl und ggf. Reste von Formaldehyd abdestilliert. Dabei wurde der Druck mittels Vakuumpumpe schrittweise auf <20 mbar abgesenkt. Die Vakuumdestillation wurde 30 min bei 100 °C und <20 mbar fortgesetzt bis kein Destillat mehr kam. Das Reaktionsgemisch wurde auf 70 °C abgekühlt und abgefüllt. 450 g des erhaltenen Produkts wurden in ein Reaktionsgefäß eingewogen und gemäß Schritt d) mit 500 g Wasser verdünnt. Es entstand eine homogene wässerige Lösung mit einem pH-Wert von 0,75 (pH-Elektrode). Zur Neutralisation gemäß Schritt e) wurden unter Rühren bei 40-70 °C 52,6 g Natronlauge (45 %) zugegeben bis ein pH-Wert von 4,0 bis 4,5 erreicht war. Neutralisationswärme wurde frei. Der Ansatz wurde mit Wasser auf einen Feststoffgehalt von 30 Gew.-% verdünnt und abgelassen. Es wurden 1,52 kg des fertigen homogen gelösten und bräunlichen Polyetheramidaminphosphonats mit einem pH-Wert von 4,7 erhalten.

### Beispiel c3 (erfindungsgemäß):

Analog Beispiel c1 wurden 430 g des Produkts aus aus Versuch b3 bei 30 °C vorgelegt und mit Stickstoff inertisiert. 41,7 g HCl (37 % in Wasser) wurden in 5 min zugeben und 15 min gerührt. 34,6 g Phosphonsäure (bei RT fest) wurden portionsweise bei 30-35 °C innerhalb von 5-10 min unter Rühren zugeben. Das Reaktionsgemisch wurde im Anschluss auf 100 °C erwärmt. 12,7 g Paraformaldehyd wurden bei 100 °C Reaktionstemperatur in 5-10 min unter Rühren zugegeben. Anschließend wurde 5 h bei 100 °C gerührt. Das feste Paraformaldehyd ging dabei in Lösung und das Reaktionsgemisch färbte sich bräunlich. In 1 h wurde bei 100 °C Wasser, HCl und ggf. Reste von Formaldehyd abdestilliert. Dabei wurde der Druck mittels Vakuumpumpe schrittweise auf <20 mbar abgesenkt. Die Vakuumdestillation wurde 30 min bei 100 °C und <20 mbar fortgesetzt bis kein Destillat mehr kam. Das Reaktionsgemisch wurde auf 70 °C abgekühlt und abgefüllt. 437 g des erhaltenen Produkts wurden in ein Reaktionsgefäß eingewogen und gemäß Schritt d) mit 500 g Wasser verdünnt. Es entstand eine homogene wässerige Lösung mit einem pH-Wert von 0,7 (pH-Elektrode). Zur Neutralisation gemäß Schritt e) wurden unter Rühren bei 50-60 °C 31,4 g Natronlauge (45 %) zugegeben bis ein pH-Wert von 4,0 bis 4,5 erreicht war. Neutralisationswärme wurde frei. Der Ansatz wurde mit Wasser auf einen Feststoffgehalt von 30 Gew.-% verdünnt und abgelassen. Es wurden 1,47 kg des fertigen homogen gelösten und bräunlichen Polyetheramidaminphosphonats mit einem pH-Wert von 4,4 erhalten.

### Beispiel c4 (erfindungsgemäß):

Analog Beispiel c1 wurden 470 g des Produkts aus aus Versuch b4 bei 40 °C vorgelegt und mit Stickstoff inertisiert. 41,8 g HCl (37 % in Wasser) wurden in 5 min zugeben und 15 min gerührt. 34,8 g Phosphonsäure (bei Raumtemperatur fest) wurden portionsweise bei 30-35 °C innerhalb von 5-10 min unter Rühren zugeben. Das Reaktionsgemisch wurde im Anschluss auf 100 °C erwärmt. 12,7 g Paraformaldehyd wurden bei 100 °C Reaktionstemperatur in 5 min unter Rühren zugegeben. Anschließend wurde 5 h bei 100 °C gerührt. Das feste Paraformaldehyd ging dabei in Lösung und das Reaktionsgemisch färbte sich bräunlich. In 1 h wurde bei 100 °C Wasser, HCl und ggf. Reste von Formaldehyd abdestilliert. Dabei wurde der Druck mittels Vakuumpumpe schrittweise auf <20 mbar abgesenkt. Die Vakuumdestillation wurde 30 min bei 100 °C und <20 mbar fortgesetzt bis kein Destillat mehr kam. Das Reaktionsgemisch wurde auf 70 °C abgekühlt und abgefüllt. 395 g des erhaltenen Produkts wurden in ein Reaktionsgefäß eingewogen und gemäß Schritt d) mit 700 g Wasser verdünnt. Es entstand eine homogene wässerige Lösung mit einem pH-Wert von 0,86 (pH-Elektrode). Zur Neutralisation gemäß Schritt e) wurden unter Rühren bei 50-60 °C 23,9 g Natronlauge (45 %) zugegeben bis ein pH-Wert von 4,4 erreicht war. Neutralisationswärme wurde frei. Der Ansatz wurde mit Wasser auf einen Feststoffgehalt von 30 Gew.-% verdünnt und abgelassen. Es wurden 1,32 kg des fertigen homogen gelösten und bräunlichen Polyetheramidaminphosphonats mit einem pH-Wert von 4,5 erhalten.

### Beispiel c5 (erfindungsgemäß) - Überschuss von Formaldehyd, Salzsäure, Phosphonsäure bzgl. NH-Gruppen:

Analog Beispiel c1 wurden 460 g des Produkts aus aus Versuch b5 bei 22 °C vorgelegt und mit Stickstoff inertisiert. 119,2 g HCl (37 % in Wasser) wurden in 15 min zugeben und 15 min gerührt. 99,1 g Phosphonsäure (bei RT fest) wurden portionsweise bei 55-60 °C innerhalb von 5-10 min unter Rühren zugeben. Das Reaktionsgemisch wurde im Anschluss auf 100 °C erwärmt. 36,3 g Paraformaldehyd wurden bei 100 °C Reaktionstemperatur in 15 min unter Rühren zugegeben. Anschließend wurde 5 h bei 100 °C gerührt. Das feste Paraformaldehyd ging dabei in Lösung und das Reaktionsgemisch färbte sich bräunlich. In 1 h wurde bei 100 °C Wasser, HCl und ggf. Reste von Formaldehyd abdestilliert. Dabei wurde der Druck mittels Vakuumpumpe schrittweise auf <20 mbar abgesenkt. Die Vakuumdestillation wurde 30 min bei 100 °C und <20 mbar fortgesetzt bis kein Destillat mehr kam. Das Reaktionsgemisch wurde auf 70 °C abgekühlt und abgefüllt. 500 g des erhaltenen Produkts wurden in ein Reaktionsgefäß eingewogen und gemäß Schritt d) mit 900 g Wasser verdünnt. Es entstand eine homogene wässerige Lösung mit einem pH-Wert von 0,57 (pH-Elektrode). Zur Neutralisation gemäß Schritt e) wurden unter Rühren bei 50-60 °C 88,1 g Natronlauge (45 %) zugegeben bis ein pH-Wert von 4,0 bis 4,5 erreicht war. Neutralisationswärme wurde frei. Der Ansatz wurde mit Wasser auf einen Feststoffgehalt von 30 Gew.-% verdünnt und abgelassen. Es wurden 1,7 kg des fertigen homogen gelösten und bräunlichen Polyetheramidaminphosphonats mit einem pH-Wert von 4,5 erhalten.

### Beispiel c6 (erfindungsgemäß) - ohne starke Säure / Salzsäure:

Analog Beispiel c1 wurden 275 g des Produkts aus aus Versuch b6 und 22,5 g Wasser bei 40 °C vorgelegt und mit Stickstoff inertisiert. 36,1 g Phosphonsäure (bei RT fest) wurden portionsweise bei 55-60 °C innerhalb von 10-15 min unter Rühren zugeben. Das Reaktionsgemisch wurde im Anschluss auf 90 °C erwärmt. 18,4 g Paraformaldehyd wurden bei 90 °C Reaktionstemperatur in 5 min unter Rühren zugegeben. Anschließend wurde 3,5 h bei 100 °C gerührt. Das feste Paraformaldehyd ging dabei in Lösung und das Reaktionsgemisch färbte sich bräunlich. In 1 h wurde bei 100 °C Wasser und ggf. Reste von Formaldehyd abdestilliert. Dabei wurde der Druck mittels Vakuumpumpe schrittweise auf <20 mbar abgesenkt. Die Vakuumdestillation wurde 30 min bei 100 °C und <20 mbar fortgesetzt bis kein Destillat mehr kam. Das Reaktionsgemisch wurde auf 70 °C abgekühlt und abgefüllt. Gemäß ³¹P-NMR-Spektrum hat die Phosphonierungsreaktion nicht in dem Umfang wie gewünscht stattgefunden. Es sind nicht identifizierte Nebenprodukte entstanden und der Anteil an Zielprodukt war geschätzt <20 mol-%. Auf die Neutralisation und Verdünnung mit Wasser wurde daher verzichtet.

### Anwendungstechnische Prüfung:

Von den erfindungsgemäßen aufgeführten Beispielen c1-c6 werden exemplarisch die mit den Produkten c1 und c3 generierten Messwerte erläutert. Die Produkte wurden auf ihre Verwendung als Dispergiermittel und ihren Einfluß auf in der Industrie typischen anwendungstechnischen Kenngrößen in einem Mörtel untersucht. Im Vordergrund standen Messgrößen zur Charakterisierung der anwendungsnahen rheologischen Eigenschaften. Als Referenz diente ein Mörtel ohne Dispergieradditiv. Bei dem Vergleichsprodukt handelt es sich um ein im Markt herkömmlich eingesetztes anionisches Dispergieradditiv auf Polymerbasis.

### 1. Zusammensetzung der Mörtelmischung und deren Herstellung

Die Zusammensetzung der Mörtelmischung ist in Tabelle 1 dargestellt.

**Tabelle 1: Zusammensetzung der Mörtelmischung**

| | |
|---|---|
| CEM I 52,5 R | 28,0 % |
| Kalksteinmehl | 22,6 % |
| Sand 0/2 | 49,4 % |
| Fließmittel auf Basis eines Polycarboxylatethers (PCE)* (Lieferform) Sika Viscocrete 1095 | 2,0 % |
| Dispergieradditiv* (30 %ig) | 2,0 % |
| Wassergehalt* | 44,0 % |

| | |
|---|---|
| * bezogen auf den Zementgehalt | |

Die Mörtelherstellung zur Bestimmung der Frisch- und Festmörteleigenschaften erfolgt nach nachstehender Prozedur:
- Die Trockenkomponenten (Zement, Kalksteinmehl, Sand) werden in der Rührschüssel eines Hobartmischers vorgelegt und für 30 Sekunden auf Stufe 1 gemischt
- Die Flüssigkomponenten (PCE, Dispergieradditiv) werden zunächst dem Wasser zugegeben und die Additiv-Wasser-Mischung über einen Zeitraum von 30 Sekunden den Trockenkomponenten, während auf Stufe 1 gerührt wird
- Weiteres Rühren für 1 Minute auf Stufe 1
- Mischpause für 30 Sekunden, Topfboden und -wandungen werden von anklebenden Mörtelbestandteilen befreit
- Abschließend wird für 1 Minute auf Stufe 2 gerührt
- Der Mörtel steht für weitere Untersuchungen zur Verfügung

### 2. Bestimmung des Ausbreitmaß

Die Bestimmung erfolgt nach einer internen Labormethode. Dazu wird die Mörtelmischung bündig in den Ring (Durchmesser d 67 mm, Höhe h 35 mm) eingefüllt, nach 5 Minuten Standzeit angehoben und nach 5 Minuten der Durchmesser des Mörtelkuchens in mm mittels Schieblehre bestimmt. Das Ausbreitmaß dient als praxisnahe Messgröße für die Beschreibung der Fließgrenze. Je größer sich der Mörtelkuchen ausbreitet, desto geringer ist die Fließgrenze.

### 3. Bestimmung der Trichterauslaufzeit

Die Bestimmung erfolgt in einem V-förmigen Trichter für Mörtelprüfungen mit den Abmessungen 275 mm (oberer Kreisdurchmesser) × 30 × 320 mm³ und einem Auslauf von 30 × 30 mm². Unter Trichterauslaufzeit t_{Tr} versteht man die Zeitspanne in Sekunden, innerhalb der der Mörtel aus einem Trichter mit vorgegebenen Abmessungen ausfließt. Sie dient als Meßgröße für die Beschreibung der Viskosität des Mörtels. Je schneller der Mörtel aus dem Trichter ausläuft, desto geringer seine Viskosität.

### 4. Bestimmung des Abbindeverhaltens

Für die Bestimmung des Abbindeverhaltens der Mörtelmischungen kam das Meßgerät 'Thermokurve-2022' der Firma Physikalische Messsysteme zum Einsatz. Mittels eines Termperaturfühlers wird die Temperatur über die Zeit von der Mörtelprobe, die sich in einem isolierten Behälter befindet, gemessen. Für zementhaltige Proben ergeben sich charakterische Kurven, die die Vorgänge bei der Umsetzung des Zementes mit Wasser beschreiben. Mit dieser Methode lässt sich zuverlässig der Einfluß von Zusatzmitteln auf das Abbindeverhalten der jeweiligen Mischung bestimmen, je nach Verschiebung der maximalen Temperatur Tₘₐₓ hin zu längeren oder kürzeren Abbindezeiten sowie der Höhe von Tₘₐₓ, im Vergleich zur jeweiligen Referenzmischung. Die Ergebnisse sind in Tabelle 2 dargestellt.

**Tabelle 2: Ergebnisse der anwendungstechnischen Ausprüfungen im Mörtel**

| | Ausbreitmaß [mm] | Trichterauslaufzeit t_{Tr} [s] | Tₘₐₓ [°C] nach t [h:min] |
|---|---|---|---|
| Referenz | Mörtel nicht fließfähig | Mörtel nicht fließfähig | 43,3 nach 14:00 |
| Vergleichsprodukt | 233 | 16 | 35,7 nach 26:50 |
| c1 | 239 | 13 | 44,4 nach 16:05 |
| c3 | 228 | 17 | 46,6 nach 17:40 |

Die Ergebnisse zeigen, dass die erfindungsgemäßen Beispiele die Fließfähigkeit des Mörtels gegenüber der Referenz deutlich verbessern. Fließgrenze und Viskosität werden reduziert. Gegenüber dem Vergleichsprodukt ist der geringere Einfluß auf das Zementabbinden hervorzuheben.

## Patentansprüche

1. Verfahren zur Herstellung von Polyetheramidaminphosphonsäuren oder Polyetheramidaminphosphonatsalzen oder deren wässerige Lösungen, welches die folgenden Schritte umfasst:
a) Umsetzung mindestens eines Salicylsäureesters als Startverbindung einer Alkoxylierungsreaktion in Gegenwart von mindestens einem Doppelmetallcyanid (DMC)-Katalysator mit mindestens einem Epoxid zu mindestens einem Polyether;
b) Umsetzung des mindestens einen Polyethers aus Schritt a) mit mindestens einem Polyamin, das mindestens zwei Aminogruppen ausgewählt aus der Gruppe bestehend aus primären und sekundären Aminogruppen trägt, zu mindestens einem Polyetheramidamin;
c) Umsetzung des mindestens einen Polyetheramidamins aus Schritt b) mit mindestens einem Aldehyd und Phosphonsäure zu mindestens einer Polyetheramidaminphosphonsäure;
und gegebenenfalls
d) Lösen der mindestens einen Polyetheramidaminphosphonsäure aus Schritt c) in Wasser;
und gegebenenfalls
e) vollständige oder teilweise Neutralisation der mindestens einen Polyetheramidaminphosphonsäure aus Schritt c) oder deren wässerige Lösung aus Schritt d) mit mindestens einer Base zu mindestens einem Polyetheramidaminphosphonatsalz oder dessen wässerige Lösung;
**dadurch gekennzeichnet, dass**
(i) der mindestens eine Salicylsäureester ausgewählt ist aus Verbindungen der Formel (1) 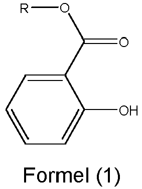 wobei R ein Kohlenwasserstoffrest mit mindestens drei Kohlenstoffatomen ist; und
(ii) als Epoxid zumindest Propylenoxid verwendet wird, und der mindestens eine Salicylsäureester vor einer optionalen Umsetzung mit weiteren Epoxiden zunächst mit Propylenoxid umgesetzt wird.

2. Verfahren nach Anspruch 1, **dadurch gekennzeichnet, dass** R in Formel (1) ein gesättigter oder ungesättigter, linearer oder verzweigter Kohlenwasserstoffrest mit 3 bis 8, bevorzugt mit 4 bis 6, bevorzugter mit 4 Kohlenstoffatomen und besonders bevorzugt ein Isobutylrest ist.

3. Verfahren nach Anspruch 1 oder 2, **dadurch gekennzeichnet, dass** im Schritt a) keine Benzoesäure als Cokatalysator eingesetzt wird.

4. Verfahren nach einem der Ansprüche 1 bis 3, **dadurch gekennzeichnet, dass** in Schritt a) zusätzlich zu Propylenoxid noch weitere Epoxide, ausgewählt aus der Gruppe bestehend aus Ethylenoxid und Alkylenoxiden mit 4 bis 8 Kohlenstoffatomen, bevorzugt ausgewählt aus der Gruppe bestehend aus Ethylenoxid, 1-Butylenoxid und Styroloxid, umgesetzt werden.

5. Verfahren nach einem der Ansprüche 1 bis 4, **dadurch gekennzeichnet, dass** im Schritt a) das molare Verhältnis der Gesamtheit der Epoxide zur Gesamtheit der Salicylsäureester von 5 bis 250, bevorzugt von 10 bis 200 besonders bevorzugt von 15 bis 100 beträgt.

6. Verfahren nach einem der Ansprüche 1 bis 5, **dadurch gekennzeichnet, dass** im Schritt b) die Umsetzung in Gegenwart von mindestens einem basischen Katalysator erfolgt, der optional im Anschluss mit mindestens einer Säure neutralisiert wird.

7. Verfahren nach einem der Ansprüche 1 bis 6, **dadurch gekennzeichnet, dass** im Schritt b) das Polyamin ausgewählt ist aus der Gruppe bestehend aus Ethylendiamin, 1,3-Propylendiamin, 1,6-Hexamethylendiamin, Isophorondiamin, Diethylentriamin (DETA), Triethylentetramin (TETA), Tetraethylenpentamin (TEPA), Pentaethylenhexamin (PEHA) und Polyethylenimin.

8. Verfahren nach einem der Ansprüche 1 bis 7, **dadurch gekennzeichnet, dass** im Schritt b) das molare Verhältnis der Gesamtheit der Polyether zur Gesamtheit der Polyamine von 1,00:1 bis 1,80:1, bevorzugt von 1,05:1 bis 1,60:1, besonders bevorzugt von 1,10:1 bis 1,40:1 beträgt.

9. Verfahren nach einem der Ansprüche 1 bis 8, **dadurch gekennzeichnet, dass** im Schritt c) die Umsetzung in Gegenwart von mindestens einer Säure mit einem pKs-Wert unterhalb des pKs-Werts von Phosphonsäure, bevorzugt mit einem pKs-Wert von weniger als 1,5, besonders bevorzugt von weniger als 1,0 durchgeführt wird.

10. Verfahren nach einem der Ansprüche 1 bis 9, **dadurch gekennzeichnet, dass** im Schritt c)
- das molare Verhältnis von Phosphonsäure zu den aminischen N-H Gruppen der Gesamtheit der Polyetheramidamine von 0,3:1 bis 1,5:1, bevorzugt von 0,7:1 bis 1,3:1, besonders bevorzugt von 0,9:1 bis 1,1:1 beträgt; und/oder
- das molare Verhältnis der Gesamtheit der Aldehyde zu den aminischen N-H Gruppen der Gesamtheit der Polyetheramidamine von 0,3:1 bis 1,5:1, bevorzugt von 0,7:1 bis 1,3:1, besonders bevorzugt von 0,9:1 bis 1,1:1 beträgt.

11. Verfahren nach einem der Ansprüche 1 bis 10, **dadurch gekennzeichnet, dass** im Schritt c) der Aldehyd Formaldehyd ist.

12. Produkt herstellbar nach dem Verfahren nach einem der Ansprüche 1 bis 11.

13. Verwendung des Produkts nach Anspruch 12 als Dispergiermittel.

14. Hydraulisch abbindende Zusammensetzung, enthaltend die Komponenten:
a) mindestens ein hydraulisches Bindemittel, vorzugsweise Zement;
b) mindestens ein Produkt nach Anspruch 12;
c) vorzugsweise mindestens einen Zuschlagsstoff ausgewählt aus der Gruppe bestehend aus Sand, Kies, Splitt, Brechsand, Kalkstein und Kreide;
d) vorzugsweise zusätzliches Wasser; und
e) vorzugsweise mindestens ein Fließmittel, insbesondere auf Basis von Polycarboxylatether.

15. Hydraulisch abbindende Zusammensetzung nach Anspruch 14, **dadurch gekennzeichnet, dass** sie ein Mörtel, ein Estrich oder ein Beton ist.
